(19) Europäisches Patentamt / European Patent Office / Office européen des brevets

(11) **EP 3 956 126 B1**

(12) **EUROPÄISCHE PATENTSCHRIFT**

(45) Veröffentlichungstag und Bekanntmachung des Hinweises auf die Patenterteilung:
**22.03.2023  Patentblatt 2023/12**

(21) Anmeldenummer: **20723793.4**

(22) Anmeldetag: **17.04.2020**

(51) Internationale Patentklassifikation (IPC):
**B29C 64/112** (2017.01)   **B29C 64/124** (2017.01)
**B29C 64/153** (2017.01)   **B29C 64/209** (2017.01)
**B33Y 10/00** (2015.01)   **B33Y 30/00** (2015.01)
**B22F 3/105** (2006.01)

(52) Gemeinsame Patentklassifikation (CPC):
**B29C 64/112; B29C 64/124; B29C 64/153; B29C 64/209; B33Y 10/00; B33Y 30/00**

(86) Internationale Anmeldenummer:
**PCT/EP2020/060838**

(87) Internationale Veröffentlichungsnummer:
**WO 2020/212564 (22.10.2020 Gazette 2020/43)**

(54) **VERFAHREN ZUM HERSTELLEN MINDESTENS EINER FESTKÖRPERSCHICHT AUF EINER UM EINE DREHACHSE DREHBAREN UNTERLAGE**

METHOD FOR PRODUCING AT LEAST ONE SOLID BODY LAYER ON A SUBSTRATE WHICH IS ROTATABLE ABOUT AN AXIS OF ROTATION

PROCÉDÉ DE FABRICATION D'AU MOINS UNE COUCHE SOLIDE SUR UN SUPPORT POUVANT TOURNER AUTOUR D'UN AXE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2019   DE 102019002808**

(43) Veröffentlichungstag der Anmeldung:
**23.02.2022   Patentblatt 2022/08**

(73) Patentinhaber: **dp polar GmbH**
**76344 Eggenstein-Leopoldshafen (DE)**

(72) Erfinder: **MATHEA, Hans**
**76344 Eggenstein-Leopoldshafen (DE)**

(74) Vertreter: **Huwer, Andreas**
**Huwer & Partner**
**Patent- und Rechtsanwälte PartG mbB**
**Guntherstraße 3**
**76185 Karlsruhe (DE)**

(56) Entgegenhaltungen:
WO-A1-2016/180842     DE-A1-102010 041 284
US-A1- 2016 096 319     US-A1- 2016 339 724
US-B2- 10 150 247

EP 3 956 126 B1

**Beschreibung**

Die Erfindung betrifft ein Verfahren zum Herstellen mindestens einer Festkörperschicht auf einer um eine Drehachse drehbaren Unterlage gemäß vorgegebener Geometriedaten.

Bei einem aus der US 2004/0265413 A1 bekannten Verfahren werden Geometriedaten, die als Druckpunkte eines rechtwinkligen Koordinatensystems in einem Speicher hinterlegt sind, mit Hilfe einer Koordinatentransformationseinrichtung in Polarkoordinaten konvertiert. Bei dem Verfahren wird ein 3D-Drucker bereitgestellt, der zwei Emitteranordnungen mit jeweils mehreren zueinander beabstandeten, als Düsen ausgebildeten Emittern aufweist, die zur Abgabe von Materialportionen eines flüssigen Materials auf die Unterlage dienen. Die Unterlage ist kreisscheibenförmig ausgestaltet und mit Hilfe eines Antriebs um eine Drehachse relativ zur Emitteranordnung drehpositionierbar. Mit Hilfe eines Encoders wird ein Drehlagesignal für die Relativposition zwischen den Emitteranordnungen und der Unterlage erzeugt.

Außerdem kann die Unterlage in vertikale Richtung relativ zur Düsenanordnung positioniert werden. Hierdurch ist es möglich, die Unterlage während des Druckprozesses pro Umdrehung jeweils um die Dicke der zuletzt aufgetragenen Materialschicht relativ zur Düsenanordnung abzusenken, um auf diese Materialschicht eine weitere Materialschicht aufzubringen und somit schichtweise einen Formgegenstand herzustellen.

Jede Emitteranordnung weist eine Vielzahl von handelsüblichen Druckköpfen auf, die auf einem an einer Schiebeführung angeordneten Druckkopf-Träger radial zur Rotationsachse inkrementell verschiebbar sind. Hierdurch sollen Unregelmäßigkeiten beim Drucken, die durch nicht funktionierende Druckköpfe, Aussetzer oder falsch positionierte Emitter verursacht sein können, korrigiert werden, indem die Position der Emitteranordnung von Schicht zu Schicht verändert wird. Fehler, die durch das Aussetzen eines Emitters verursacht sind, sind somit bei den einzelnen gedruckten Schichten an unterschiedlichen Stellen angeordnet und werden gemittelt. Außerdem können die Emitteranordnungen mit Hilfe der Druckkopf-Träger zwischen eine Druckposition, in der die Emitter über der Unterlage angeordnet sind, einer Diagnoseposition, in der die Emitter an einer neben der Unterlage befindlichen Diagnoseeinrichtung positioniert sind, und eine Diagnose-Position angeordnet werden, in der die Emitter neben der Unterlage und neben der Service-Position positioniert sind. In der Service-Position können die Emitter gereinigt oder ausgewechselt werden.

Wie die Emitter der Emitteranordnungen genau angeordnet sind und wie sie während des Druckens angesteuert werden, ist in der Offenlegungsschrift nicht näher offenbart.

Aus der Praxis sind ferner ein 3D-Drucker bekannt, der eine Halterung aufweist, an der eine etwa rechteckige, sich in einer Horizontalebene erstreckende Unterlage zur Aufnahme eines durch schichtweisen Materialauftrag herzustellenden Formgegenstands angeordnet ist. Der Drucker dient zum Drucken des Formgegenstands in einer kartesischen Koordinatenmatrix. Für den Formgegenstand werden Geometriedaten bereitgestellt, die Druckpunkten zugeordnet sind, die in einer kartesischen Koordinatenmatrix liegen.

Über der Unterlage ist ein Druckkopf an der Halterung angeordnet, der eine Düsenanordnung zur Abgabe von Materialportionen eines fließfähigen Materials auf die Unterlage aufweist, die nachstehend auch als Emitteranordnung bezeichnet wird. Die Emitteranordnung hat eine Vielzahl von als Düsen ausgebildeten Emittern, die matrixförmig in parallel zueinander versetzten Emitterspalten und parallel zueinander versetzen, quer zu den Emitterspalten verlaufenden Emitterzeilen in einem schiefwinkligen geradlinigen Koordinatensystem angeordnet sind. Zueinander benachbarte Emitterspalten sind jeweils in Erstreckungsrichtung der Emitterspalten zueinander versetzt, wobei der Versatz kleiner ist als der Versatz, den die Emitter in den Emitterspalten haben. Die Emitterspalten verlaufen parallel zu den beiden kurzen Rändern der rechteckigen Unterlage (X-Achse). Die Emitter sind derart angeordnet, dass jeder Emitter der Emitteranordnung in der parallel zu den beiden kurzen Rändern der rechteckigen Unterlage verlaufenden Richtung an einer anderen X-Position der kartesischen Koordinatenmatrix liegt. Dabei ist jeder X-Position der Koordinatenmatrix jeweils genau ein Emitter der Emitteranordnung zugeordnet.

Die Emitteranordnung ist mittels einer an der Halterung angeordneten ersten Positioniereinrichtung parallel zur Längserstreckung der Unterlage in Y-Richtung verschiebbar und zwischen den beiden voneinander entfernten kurzen Rändern hin- und her verfahrbar. Da unmittelbar zueinander benachbarte Druckpunkte, die auf einer parallel zu den beiden kurzen Rändern der rechteckigen Unterlage in Richtung der X-Achse verlaufenden Linie liegen, mit Düsen gedruckt werden, die in unterschiedlichen Emitterspalten der Emitteranordnung angeordnet sind, wird der Druckkopf beim Drucken der zueinander benachbarten Druckpunkte der Linie derart an unterschiedlichen X-Positionen positioniert, dass der Versatz, den die unterschiedlichen Emitterspalten in Richtung der X-Achse aufweisen, kompensiert wird. Dadurch können Druckpunkte, die in X-Richtung unmittelbar nebeneinander angeordnet sind, derart dicht zueinander versetzt auf die Unterlage gedruckt werden, dass sie sich bereichsweise überlappen. Dennoch sind die Emitter der Emitteranordnung räumlich voneinander getrennt und soweit voneinander beabstandet, dass zwischen den Emittern Kanäle, welche die Emitter mit einem Reservoir für das düsengängige Material verbinden, und/oder elektrische Leiterbahnen angeordnet werden können.

Die Emitter der Emitteranordnung sind zusammen mit dem Reservoir für das düsengängige Material relativ zu der Unterlage bewegbar. Benachbart zum Drucckopf ist eine Fixiereinrichtung angeordnet, die zum Vernetzen bzw. Verfestigen der mit Hilfe der Emitteranordnung aufgetragenen Materialschicht eine ultraviolette Lichtquelle aufweist. Die Fixiereinrichtung ist zusammen mit dem Druckkopf relativ zu der Unterlage bewegbar.

Der vorbekannte 3D-Drucker hat außerdem eine zweite Positioniereinrichtung, mittels welcher die Unterlage normal zu der Ebene, in der sich die Unterlage erstreckt, auf den Druckkopf zu und von diesem weg bewegbar, also in der Höhe positionierbar ist.

Zur Herstellung eines Formgegenstands wird der Druckkopf benachbart zum ersten Rand der Unterlage in einem vorbestimmten Abstand über dieser positioniert. Aus einem Datenspeicher, in dem Geometriedaten für den herzustellenden Formgegenstand abgelegt sind, werden Daten für die Geometrie einer ersten Materialschicht in einen schnellen Druckpuffer geladen. Danach wird der Druckkopf mit Hilfe der ersten Positioniereinrichtung kontinuierlich auf den gegenüberliegenden zweiten Rand der Unterlage zu verfahren. Gleichzeitig wird durch entsprechendes Ansteuern der einzelnen Emitter der Emitteranordnung an den Stellen, an denen auf der Unterlage eine erste Materialschicht des Formgegenstands ausgebildet werden soll, jeweils eine Materialportion auf die Unterlage abgegeben. Die Ansteuerung der einzelnen Emitter erfolgt in Abhängigkeit von der aktuellen Position des Druckkopfs und in Abhängigkeit von den im Druckpuffer befindlichen Daten. Das so auf die Unterlage aufgetragene fließfähige Material wird durch Bestrahlung mit ultraviolettem Licht verfestigt, welches mit Hilfe der Fixiereinrichtung erzeugt wird.

Wenn der Druckkopf am zweiten Rand der Unterlage angekommen ist, wird die horizontale Vorschubbewegung des Druckkopfs gestoppt und aus dem Datenspeicher werden Geometriedaten für eine auf die zuvor erzeugte Materialschicht aufzutragende weitere Materialschicht in den Druckpuffer geladen. Außerdem wird die Unterlage mit Hilfe der zweiten Positioniereinrichtung um ein Maß, dass der Dicke der zuvor erzeugten Materialschicht entspricht, abgesenkt, um auf diese Materialschicht eine weitere Materialschicht aufzutragen. Nun wird der Druckkopf mit Hilfe der ersten Positioniereinrichtung kontinuierlich auf den ersten Rand der Unterlage zu bewegt. Gleichzeitig wird durch entsprechendes Ansteuern der Emitter an den Stellen, an denen auf die weitere Materialschicht ausgebildet werden soll, jeweils ein Materialtropfen auf die bereits fertig gestellte Materialschicht abgegeben. Das so auf die Unterlage aufgetragene fließfähige Polymermaterial wird wiederum durch Bestrahlung mit ultraviolettem Licht verfestigt, welches mit Hilfe der Fixiereinrichtung erzeugt wird.

Das Verfahren hat den Nachteil, dass für das Abstoppen und Beschleunigen des Druckkopf-Moduls samt Zubehör an den Rändern der Unterlage Zeit benötigt wird, die zum Drucken nicht genutzt werden kann. Diese Abstoppen und Beschleunigen kann bei kleineren bis mittleren Druckflächen bis zu 50% der Gesamtdruckzeit beanspruchen und kann daher die Produktivität des Verfahrens wesentlich reduzieren. Außerdem muss der schwere Druckkopf und die damit verbundenen, relativ großen und schweren Teile, wie das Reservoir mit dem darin befindlichen fließfähigen Materialvorrat, die verschleißanfälligen Kabelschleppen und die Fixiereinrichtung nach jedem Fertigstellen einer Materialschicht angehalten und - falls eine weitere Materialschicht aufgetragen werden soll - in die entgegengesetzte Richtung beschleunigt werden. Durch die dabei auftretenden Beschleunigungskräfte wird die Mechanik der Positioniereinrichtungen belastet, was zu entsprechendem Verschleiß an den Lagern und Führungen Positioniereinrichtungen führt und damit die Genauigkeit des Druckers beeinträchtigt.

Es besteht deshalb die Aufgabe, ein Verfahren der eingangs genannten Art anzugeben, das es ermöglicht, mindestens eine Festkörperschicht entsprechend von in einem Speicher hinterlegten Geometriedaten mittels einer Emitteranordnung, bei der die Emitter in einem schiefwinkligen geradlinigen Koordinatensystem angeordnet sind, auf einfache Weise schnell herzustellen. Außerdem soll das Verfahren es ermöglichen, aus einer Vielzahl von dicht zueinander benachbarten und/oder sich bereichsweise überlappenden Druckpunkten zusammengesetzte einzelne radiale Linien, die gemäß den Geometriedaten gedruckt werden sollen, mit akzeptabler Hilfe der ersten Positioniereinrichtung kontinuierlich auf den ersten Rand der Unterlage zu bewegt. Gleichzeitig wird durch entsprechendes Ansteuern der Emitter an den Stellen, an denen auf die weitere Materialschicht ausgebildet werden soll, jeweils ein Materialtropfen auf die bereits fertig gestellte Materialschicht abgegeben. Das so auf die Unterlage aufgetragene fließfähige Polymermaterial wird wiederum durch Bestrahlung mit ultraviolettem Licht verfestigt, welches mit Hilfe der Fixiereinrichtung erzeugt wird.

Das Verfahren hat den Nachteil, dass für das Abstoppen und Beschleunigen des Druckkopf-Moduls samt Zubehör an den Rändern der Unterlage Zeit benötigt wird, die zum Drucken nicht genutzt werden kann. Diese Abstoppen und Beschleunigen kann bei kleineren bis mittleren Druckflächen bis zu 50% der Gesamtdruckzeit beanspruchen und kann daher die Produktivität des Verfahrens wesentlich reduzieren. Außerdem muss der schwere Druckkopf und die damit verbundenen, relativ großen und schweren Teile, wie das Reservoir mit dem darin befindlichen fließfähigen Materialvorrat, die verschleißanfälligen Kabelschleppen und die Fixiereinrichtung nach jedem Fertigstellen einer Materialschicht angehalten und - falls eine weitere Materialschicht aufgetragen werden soll - in die entgegengesetzte Richtung beschleunigt werden. Durch die dabei auftretenden Beschleunigungskräfte wird die Mechanik der Positioniereinrichtungen belastet, was zu entsprechendem Verschleiß an den Lagern und Führungen Positioniereinrichtungen führt und damit die Genauigkeit des Druckers beeinträchtigt.

Die US 2016/096319 A1 offenbart ein Verfahren, bei dem sich eine Bauplattform um eine vertikale Achse dreht. Ein Druckkopf zum Bedrucken der Bauplattform mit Materialschichten wird in radialer Richtung mit einer linearen Geschwindigkeit bewegt, die es ermöglicht, dass das Produkt aus dem Abstand des Druckkopfs zur Mitte der Bauplattform und der Winkelgeschwindigkeit der Bauplattform konstant bleibt. Hierdurch wird die Dichte der auf die Bauplattform ausgegebenen Materialtropfen in radialer Richtung konstant gehalten. Bei einer anderen in der Offenlegungsschrift beschriebenen Lösung wird die Dichte der auf die Bauplattform ausgegebenen Materialtropfen in radialer Richtung dadurch konstant gehalten, dass der Abstand zwischen den Düsen in den Druckköpfen des Druckers in radialer Richtung zur Rotationsache hin verringert wird. Wie die Düsen des Druckkopfs in Abhängigkeit der zu erzeugenden Materialpunkte angesteuert werden, ist in der Offengungsschrift nicht näher beschrieben.

Die US 2016/339724 A1 offenbart eine Matrixanordnung mehrerer Materialabgabedüsen. Sowohl der Druckkopf als auch die Bauplattform können linear und/oder radial bewegt werden. Wie die Düsen des Druckkopfs in Abhängigkeit der zu erzeugenden Materialpunkte angesteuert werden, ist in der Offenlegungsschrift nicht näher beschrieben.

Bei einem aus DE 10 2010 041 284 A1 bekannten Verfahren zum Lasersintern werden Energieeinträge in Form von Linien auf eine Querschnittsfläche eines zu bildenden Bauteils eingebracht, um das pulverförmige Material zu verfestigen. Das Verfahren sieht vor, dass bei Bauteilen mit Querschnittsflächen, die eine gekrümmte Kontur aufweisen, die Energieeinträge linienförmig der gekrümmten Kontur folgend geführt werden, damit die Kontur des sich ausbildenden Werkstücks stufenlos nachgebildet wird. Hierdurch sollen Unebenheiten in der Kontur, die durch die durch das Verfahren des Lasersinterns vorgegebene Rasterung entstehen, weitgehend vermieden werden. Die Ansteuerung der einzelnen Laser in Bezug auf die zu erzeugende Geometrie ist in der Offengungsschrift im Detail nicht näher beschrieben.

Die US 10 150 247 B2 offenbart ein Stereolithographieverlahren, bei dem eine rotierende Bauplattform und eine Belichtungseinheit mit mehreren matrixförmig angeordneten Lichtemittern zum Einsatz kommt. Wie die Lichtemitter in Abhängigkeit der zu erzeugenden Materialpunkte angesteuert werden, ist in der Patentschrift nicht näher beschrieben.

Es besteht deshalb die Aufgabe, ein Verfahren der eingangs genannten Art anzugeben, das es ermöglicht, mindestens eine Festkörperschicht entsprechend von in einem Speicher hinterlegten Geometriedaten mittels einer Emitteranordnung, bei der die Emitter in einem schiefwinkligen geradlinigen Koordinatensystem angeordnet sind, auf einfache Weise schnell herzustellen. Außerdem soll das Verfahren es ermöglichen, aus einer Vielzahl von dicht zueinander benachbarten und/oder sich bereichsweise überlappenden Druckpunkten zusammengesetzte einzelne radiale Linien, die gemäß den Geometriedaten gedruckt werden sollen, mit akzeptabler [0021] Druckqualität auf die Unterlage aufzutragen. Schließlich soll das Verfahren auch kostengünstig durchführbar sein.

Diese Aufgabe wird mit den Merkmalen des Patentanspruchs 1 gelöst. Diese sehen ein Verfahren zum Herstellen mindestens einer Festkörperschicht auf einer um eine Drehachse drehbaren Unterlage gemäß vorgegebener Geometriedaten vor,

a) wobei zur Abgabe von Materialportionen eines düsengängigen Materials auf eine Unterlage eine Emitteranordnung mit einer Anzahl von N als Materialabgabedüsen ausgebildeten Emittern bereitgestellt wird, die matrixförmig in parallel zueinander versetzten Emitterspalten und parallel zueinander versetzen, quer zu den Emitterspalten verlaufenden Emitterzeilen angeordnet sind, wobei in Umfangsrichtung der Drehachse zueinander benachbarte Emitterspalten jeweils in Erstreckungsrichtung der Emitterspalten derart zueinander versetzt sind, dass die einzelnen Emitter der Emitteranordnung in unterschiedlichen radialen Abständen DA(i) zur Drehachse angeordnet sind, wobei gilt:

$$DA(i) > DA(i + 1)$$

mit $i \in [1..(N - 1)]$

b) wobei den Geometriedaten Druckpunkte ($P_M ... P_M+_N$) zugeordnet sind, die in einer Matrix mit mehreren nebeneinander verlaufenden Reihen, in denen jeweils eine Anzahl von Q Druckpunkten angeordnet sind, derart zueinander versetzt sind, dass gilt:

$$PA(j) > PA(j + 1),$$

mit $j \in [M..(M + N - 1)]$ und $1 \leq M \leq Q - N$, wobei PA(j) der radiale Abstand des j-ten Druckpunkts $P_j$ der betreffenden Reihe zur Drehachse und M eine ganze Zahl ist,

c) wobei für Druckpunkte $P_k$, für die Material auf die Unterlage abgegeben werden soll, jeweils mindestens eine Materialportion aus dem dem betreffenden Druckpunkt $P_k$ zugeordneten Emitter $D_k$ der Emitteranordnung abgegeben wird, wobei k eine ganze Zahl zwischen M und M+N-1 ist,

d) wobei die Abgabe der Materialportionen in Druckzyklen erfolgt, in denen die Emitteranordnung zur Materialabgabe jeweils einmal an einer dem betreffenden Druckzyklus zugeordneten Triggerstelle getriggert wird und die Druckunterlage sowie die Emitteranordnung jeweils von Druckzyklus zu Druckzyklus um einen Winkelabstand bezüglich der Drehachse relativ zueinander versetzt werden,

e) wobei der Druck aller zu druckenden Druckpunkte $P_M$ ... $P_{M+N-1}$ einer Reihe in einer Anzahl von Druckzyklen erfolgt, die größer ist als die Anzahl der Emitterspalten,

f) wobei der Druckzyklus für jeden zu druckenden Druckpunkt jeweils derart gewählt wird, dass der Winkelunterschied zwischen der Drehposition der Triggerstelle des Druckzyklus und der Drehposition, in welcher der zu druckende Druckpunkt in Bezug zu der Drehachse angeordnet ist, wenn die die Unterlage relativ zur Emitteranordnung an der Triggerstelle positioniert ist, betragsmäßig nicht größer ist als die Hälfte des Winkelabstands zwischen den Triggerstellen.

Die vorstehend genannte Aufgabe wird auch mit den Merkmalen des Patentanspruchs 2 gelöst. Diese sehen ein Verfahren zum Herstellen mindestens einer Festkörperschicht auf einer um eine Drehachse drehbaren Unterlage gemäß vorgegebener Geometriedaten vor,

a) wobei ein Behälter bereitgestellt wird, in dem mindestens eine Materialschicht aus einem flüssigen, pastösen oder pulverförmigen Material auf eine Unterlage aufgebracht wird, wobei zur Bestrahlung des Materials mit einer das Material verfestigenden Strahlung eine Emitteranordnung mit einer Anzahl von N zueinander beabstandeten, der Materialschicht zugewandten Strahlungs-Emittern bereitgestellt wird, die matrixförmig in parallel zueinander versetzten Emitterspalten und parallel zueinander versetzen, quer zu den Emitterspalten verlaufenden Emitterzeilen angeordnet sind, wobei in Umfangsrichtung der Drehachse zueinander benachbarte Emitterspalten jeweils in Erstreckungsrichtung der Emitterspalten derart zueinander versetzt sind, dass die einzelnen Emitter der Emitteranordnung in unterschiedlichen radialen Abständen DA(i) zur Drehachse angeordnet sind, wobei gilt:

$$DA(i) > DA(i + 1)$$

mit $i \in [1..(N - 1)]$

b) wobei den Geometriedaten Druckpunkte zugeordnet sind, die in einer Matrix mit mehreren nebeneinander verlaufenden Reihen, in denen jeweils eine Anzahl von Q Druckpunkten angeordnet sind, derart zueinander versetzt sind, dass gilt:

$$PA(j) > PA(j + 1),$$

mit $j \in [M..(M + N - 1)]$ und $1 \leq M \leq Q - N$, wobei PA(j) der radiale Abstand des j-ten Druckpunkts $P_j$ der betreffenden Reihe zur Drehachse und M eine ganze Zahl ist,

c) wobei für Druckpunkte $P_k$, an denen der Festkörperschicht sein soll, jeweils aus dem dem betreffenden Druckpunkt $P_k$ zugeordneten Emitter $D_k$ der Emitteranordnung Strahlung auf das Material abgegeben wird, wobei keine ganze Zahl zwischen M und M+N-1 ist,

d) wobei die Bestrahlung des Materials in Druckzyklen erfolgt, in denen die Emitteranordnung zur Bestrahlung jeweils einmal an einer dem betreffenden Druckzyklus zugeordneten Triggerstelle getriggert wird und die Unterlage sowie die Emitteranordnung jeweils von Druckzyklus zu Druckzyklus um einen Winkelabstand bezüglich der Drehachse relativ zueinander versetzt werden,

e) wobei der Druck aller zu druckenden Druckpunkte $P_M$ ... $P_{M+N-1}$ einer Reihe in einer Anzahl von Druckzyklen erfolgt, die größer ist als die Anzahl der Emitterspalten,

f) wobei der Druckzyklus für jeden zu druckenden Druckpunkt jeweils derart gewählt wird, dass der Winkelunterschied zwischen der Drehposition der Triggerstelle des Druckzyklus und der Drehposition, in welcher der zu druckende Druckpunkt in Bezug zu der Drehachse angeordnet ist, wenn die die Unterlage relativ zur Emitteranordnung an der Triggerstelle positioniert ist, betragsmäßig nicht größer ist als die Hälfte des Winkelabstands zwischen den Triggerstellen.

Erfindungsgemäß wird also jeder zu druckende Druckpunkt jeweils einem Emitter und einem Druckzyklus zugeordnet. Die Zuordnung des Emitters erfolgt dabei in der Weise, dass dem betreffenden Druckpunkt jeweils ein Emitter zugeordnet wird, bei dem der radiale Abstand zwischen z.B. dem Flächenschwerpunkt der Austrittsöffnung des Emitters und der Drehachse mit dem radialen Abstand des Druckpunkts zur der Drehachse übereinstimmt - oder falls ein solcher Emitter nicht vorhanden ist - dem Druckpunkt derjenige Emitter zugeordnet wird, bei welchem der radiale Abstand zwischen z.B. dem Flächenschwerpunkt der Austrittsöffnung des Emitters und der Drehachse möglichst gut mit dem radialen Abstand des Druckpunkts zur Drehachse übereinstimmt.
Die Zuordnung des Druckzyklus erfolgt zum Druckpunkt derart, dass die Drehposition der Triggerstelle, an der bei der Lösung gemäß Patentanspruch 1 mittels des Emitters die Materialportion für den Druckpunkt auf die Unterlage abgegeben bzw. bei der Lösung gemäß Patentanspruch 2 das in dem Behälter befindliche flüssige, pastöse oder pulverförmige Material bestrahlt wird, und der Drehposition des zu druckenden Druckpunkts übereinstimmen - oder falls eine solche Triggerstelle nicht vorhanden ist - dem Druckpunkt diejenige Triggerstelle zugeordnet wird, deren Drehposition möglichst gut mit der Drehposition des zu druckenden Druckpunkts übereinstimmt. Durch diese Maßnahmen wird es ermöglicht, dass zu druckende einzelne radiale Linien nach dem Drucken für das menschliche Auge als einzelne radiale Linien wahrgenommen werden. Insbesondere wird vermieden, dass einzelne radiale Linien vom menschlichen Auge V-förmig oder als mehrere Linien wahrgenommen werden.

Obwohl die Unterlage und die Düsenanordnung während des Druckens um die Drehachse relativ zueinander rotieren, was dem Drucken in einer polaren Koordinatenmatrix entspricht, wird als Düsenanordnung ein Druckkopf verwendet, der eigentlich zum Drucken in einer kartesischen Koordinatenmatrix vorgesehen ist. Ein solcher Druckkopf, bei dem die Emitter in einem schiefwinkligen geradlinigen Koordinatenmatrix angeordnet sind, hat gegenüber einem Druckkopf, bei dem die Emitter in einer polaren Matrix angeordnet sind, den Vorteil, dass er als Serienbauteil kostengünstig im Handel verfügbar ist. Somit lässt sich das erfindungsgemäße Verfahren kostengünstig durchführen und dennoch ermöglicht das Verfahren zumindest beim Drucken von radial zur Drehachse angeordneten Linien eine hohe Druckqualität.

Unter einem Druckpunkt wird eine Stelle verstanden, an der bei Vorliegen entsprechender Geometriedaten und gegebenenfalls bei Vorliegen weiterer Bedingungen bei der Lösung gemäß Patentanspruch 1 mindestens eine Materialposition auf die Unterlage abgegeben bzw. bei der Lösung gemäß Patentanspruch 2 das flüssige, pastöse oder pulverförmige Material bestrahlt wird. So kann es beispielsweise bei der Lösung gemäß Patentanspruch 1 zweckmäßig sein, in einem Bereich der Unterlage, der nahe an der Drehachse angeordnet ist, einen größeren Winkelabstand zwischen zueinander benachbarten Materialabgabestellen vorzusehen als in einem Bereich, der weiter von der Drehachse entfernt ist. Der größere Winkelabstand kann auch dadurch erreicht werden, dass in dem in dem zuerst genannten Bereich nicht alle Druckpunkte gedruckt werden. Durch diese Maßnahmen kann in unterschiedlich weit von der Drehachse entfernteren Bereich der Unterlage das nicht vorhanden ist - dem Druckpunkt diejenige Triggerstelle zugeordnet wird, deren Drehposition möglichst gut mit der Drehposition des zu druckenden Druckpunkts übereinstimmt. Durch diese Maßnahmen wird es ermöglicht, dass zu druckende einzelne radiale Linien nach dem Drucken für das menschliche Auge als einzelne radiale Linien wahrgenommen werden. Insbesondere wird vermieden, dass einzelne radiale Linien vom menschlichen Auge V-förmig oder als mehrere Linien wahrgenommen werden.

Obwohl die Unterlage und die Düsenanordnung während des Druckens um die Drehachse relativ zueinander rotieren, was dem Drucken in einer polaren Koordinatenmatrix entspricht, wird als Düsenanordnung ein Druckkopf verwendet, der eigentlich zum Drucken in einer kartesischen Koordinatenmatrix vorgesehen ist. Ein solcher Druckkopf, bei dem die Emitter in einem schiefwinkligen geradlinigen Koordinatenmatrix angeordnet sind, hat gegenüber einem Druckkopf, bei dem die Emitter in einer polaren Matrix angeordnet sind, den Vorteil, dass er als Serienbauteil kostengünstig im Handel verfügbar ist. Somit lässt sich das erfindungsgemäße Verfahren kostengünstig durchführen und dennoch ermöglicht das Verfahren zumindest beim Drucken von radial zur Drehachse angeordneten Linien eine hohe Druckqualität.

Unter einem Druckpunkt wird eine Stelle verstanden, an der bei Vorliegen entsprechender Geometriedaten und gegebenenfalls bei Vorliegen weiterer Bedingungen bei der Lösung gemäß Patentanspruch 1 mindestens eine Materialportion auf die Unterlage abgegeben bzw. bei der Lösung gemäß Patentanspruch 2 das flüssige, pastöse oder pulverförmige Material bestrahlt wird. So kann es beispielsweise bei der Lösung gemäß Patentanspruch 1 zweckmäßig sein, in einem Bereich der Unterlage, der nahe an der Drehachse angeordnet ist, einen größeren Winkelabstand zwischen zueinander benachbarten Materialabgabestellen vorzusehen als in einem Bereich, der weiter von der Drehachse entfernt ist. Der größere Winkelabstand kann auch dadurch erreicht werden, dass in dem in dem zuerst genannten Bereich nicht alle Druckpunkte gedruckt werden. Durch diese Maßnahmen kann in unterschiedlich weit von der Drehachse entfernten Bereichen der Unterlage das Material etwa mit der gleichen Schichtdicke aufgetragen werden. Ein entsprechendes Verfahren hierfür ist in der WO 2016/180842 A1 beschrieben, welches den Oberbegriff der unabhängigen Ansprüche 1 und 2 offenbart.

Die Geometriedaten sind bevorzugt als Bitmap abgelegt und können bei der Lösung gemäß Patentanspruch 1 für jeden Druckpunkt einen Materialabgabewert aufweisen. Der Materialabgabewert kann im einfachsten Fall zwei Zustände aufweisen, z.B. den logischen Wert "1", wenn an dem Druckpunkt mindestens eine Materialportion auf die Unterlage aufgetragen werden soll und den logischen Wert "0", wenn an dem Druckpunkt kein Material aufgetragen werden soll. Wenn für die einzelnen Druckpunkte unterschiedliche Materialmengen auf die Unterlage abgegeben werden sollen, kann der Materialabgabewert auch mehr als zwei Zustände umfassen. Bei Bedarf können die Geometriedaten auch Koordinaten für Positionen der Druckpunkte aufweisen. Es ist auch denkbar, dass nur für diejenigen Druckpunkte Koordinaten bereitgestellt werden, an denen Material auf die Unterlage aufgetragen werden soll. Ein Materialabgabewert kann in diesem Fall entfallen.

Bei einer Ausführungsform der Erfindung ist die Matrix eine kartesische Matrix und die Reihen, in denen die Druckpunkte zueinander versetzt sind, verlaufen parallel zueinander. Bei dieser Ausgestaltung des Verfahrens werden einzelne zu druckende radiale Linien so gedruckt, dass sie nach dem Drucken vom menschlichen Auge aus größerer Entfernung als einzelne radiale Linien wahrgenommen werden. Bei geraden Linien, die nicht radial verlaufen, können Verzerrungen in Form von Krümmungen auftreten. So werden beispielsweise gerade Linien, die rechtwinklig zu Linien angeordnet sind, die radial zur Drehachse ausgerichtet sind und parallel zur Unterlage verlaufen, als zur Drehachse konzentrische Kreislinien gedruckt. Bei einer bevorzugten Ausgestaltung der Erfindung ist die Matrix eine polare Matrix und die Reihen, in denen die Druckpunkte zueinander versetzt sind, sind radial zur Drehachse angeordnet, wobei vorzugsweise zueinander benachbarte Reihen jeweils im Winkelabstand der Triggerstellen zueinander versetzt sind. Dabei ist es sogar möglich, dass die Druckpunkte zunächst in einer kartesischen Matrix angeordnet sind und dann in die polare Matrix konvertiert werden. Hierdurch wird eine gute Übereinstimmung zwischen der gemäß den Geometriedaten vorgesehenen Position des zu druckenden Druckpunkts und der Stelle erreicht, an der mit Hilfe der Düse die Materialportion für den Druckpunkt auf die Unterlage aufgetragen wird. D.h. die Festkörperschicht kann verzerrungsarm gedruckt werden.

Zweckmäßigerweise wird für eine der Anzahl der Druckzyklen entsprechende Anzahl von direkt aufeinanderfolgenden Triggerstellen jeweils für die betreffende Triggerstelle für jeden Druckpunkt $P_M$ ... $P_{M+N-1}$, für dessen Druck die Emitteranordnung eingerichtet ist, dem betreffenden Druckpunkt $P_M$ ... $P_{M+N-1}$ ein Druckzyklus zugeordnet, wobei danach entsprechend dieser Zuordnung jeweils für die einzelnen Reihen jedem zu druckenden Druckpunkt $P_M$ ... $P_{M+N-1}$, für dessen Druck die Emitteranordnung eingerichtet ist, ein Druckzyklus zugeordnet und die Emitteranordnung jeweils beim Erreichen der dem betreffenden Druckzyklus zugeordneten Triggerstelle getriggert wird. Die Zuordnung der Druckpunkte zu den Druckzyklen muss also nur für eine der Anzahl der Druckzyklen entsprechende Anzahl von Druckpunkt-Reihen ermittelt werden und kann dann für alle weiteren Reihen mit Druckpunkten verwendet werden. Die Zuordnung der Druckzyklen zu den Druckpunkten kann mittels einer Hardwareschaltung erfolgen. Es ist aber auch denkbar, die Zuordnung mittels eines auf einem Mikrocomputer oder dergleichen Steuerung ablaufenden Betriebsprogramms durchzuführen.

Bei einer Weiterbildung der Erfindung ist vorgesehen,

a) dass ein Datenspeicher bereitgestellt wird, in dem die Geometriedaten abgelegt werden,
b) dass ein Ringspeicher bereitgestellt wird, der mindestens eine der Anzahl der Druckzyklen entsprechende Anzahl von Speicherplätzen aufweist, die jeweils eine der Anzahl (N) der Emitter der Emitteranordnung entsprechende der Anzahl von Speicherstellen umfassen, von denen jede jeweils einem Emitter zugeordnet ist,

c) dass für eine der Anzahl der Druckzyklen entsprechende Anzahl von unmittelbar aufeinanderfolgenden Druckzyklen jedem dieser Druckzyklen jeweils einer der Speicherplätze zugeordnet wird,
d) dass für eine erste Reihe von im Datenspeicher abgelegten Druckpunkten eine der Anzahl der Emitter der Emitteranordnung entsprechende der Anzahl von Druckpunkten, für deren Druck die Emitteranordnung eingerichtet ist, aus dem Datenspeicher ausgelesen wird,
e) dass für die den Druckpunkten der ersten Reihe zugeordneten Emitter in den den Emittern zugeordneten Speicherstellen des Ringspeichers jeweils ein Aktivierungswert abgelegt wird, der anzeigt, ob der dem betreffenden Druckpunkt zugeordnete Emitter in dem dem betreffenden Speicherplatz zugeordnete Druckzyklus aktiviert werden soll,
f) dass für eine weitere Reihe Geometriedaten für eine der Anzahl (N) der Emitter der Emitteranordnung entsprechende der Anzahl von Druckpunkten, für deren Druck die Emitteranordnung eingerichtet ist, aus dem Datenspeicher ausgelesen wird,
g) dass für die den Druckpunkten der weiteren Reihe zugeordneten Emitter in den den Emittern zugeordneten Speicherstellen des Ringspeichers jeweils ein Aktivierungswert abgelegt wird, der anzeigt, ob der dem betreffenden Druckpunkt zugeordnete Emitter in dem dem betreffenden Speicherplatz zugeordnete Druckzyklus aktiviert werden soll,
h) dass die Schritte f) und g) wiederholt werden, bis für eine der Anzahl der Druckzyklen entsprechende Anzahl von Reihen, jeweils eine der Anzahl der Emitter (N) entsprechende Anzahl Druckpunkte aus dem Datenspeicher ausgelesen und für diese Druckpunkte entsprechende Aktivierungswerte im Ringspeicher abgelegt wurden,
i) dass die Unterlage und die Emitteranordnung an der dem Druckzyklus, in dessen Speicherplatz zuerst Aktivierungswerte abgelegt wurden, zugeordneten Triggerstelle (A bis H) relativ zueinander positioniert werden und die Emitter der Emitteranordnung in Abhängigkeit von den in diesem Speicherplatz abgelegten Aktivierungswerten angesteuert werden,
j) dass für den Fall, falls noch mindestens ein weiterer Druckpunkt zu drucken ist,

- die Speicherplätze derart zyklisch vertauscht werden, dass der Speicherplatz, dem die Triggerstelle (A bis H) zugeordnet ist, an welcher die Unterlage und die Emitteranordnung zuletzt zum Triggern der Emitter relativ zueinander positioniert wurden, der erste Speicherplatz ist, und danach
- die Schritte f) bis j) wiederholt werden.

Das Verfahren ist dadurch speicherplatzsparend auf einfache Weise durchführbar. Zweckmäßigerweise wird der Emitteranordnung ein Druckpuffer zugeordnet, in dem für jeden Emitter der Emitteranordnung jeweils eine Speicherstelle vorgesehen ist, wobei in jedem Druckzyklus jeweils für jeden Emitter in Abhängigkeit von den Geometriedaten ein Aktivierungssignal in der dem betreffenden Emitter zugeordneten Speicherstelle des Druckpuffers abgelegt wird, und wobei die Emitteranordnung danach derart in dem Druckzyklus getriggert wird, dass die einzelnen Emittern in Abhängigkeit von dem in der ihnen zugeordneten Speicherstelle abgelegten Aktivierungssignal angesteuert werden. Hierdurch wird sichergestellt, dass alle Emitter, die betätigt werden sollen, beim Auftreten des Triggers gleichzeitig angesteuert werden.

Bei einer bevorzugten Ausführungsform der Erfindung werden zum Bedrucken von konzentrisch zur Drehachse angeordneten, jeweils durch eine innere und eine äußere Kreisbahn begrenzten Druckringen zumindest eine erste und eine zweite Emitteranordnung bereitgestellt, wobei diese Emitternanordnungen derart relativ zu der Drehachse positioniert werden, dass sich der arithmetische Mittelwert der inneren und der äußeren Kreisbahn der ersten Emitternanordnung vom arithmetischen Mittelwert der inneren und der äußeren Kreisbahn der zweiten Emitteranordnung unterscheidet, und wobei der ersten Emitteranordnung eine andere Zahl M zugeordnet wird als der zweiten Emitteranordnung. Die Unterlage kann also auch mit zwei oder mehr, in unterschiedlichen Abständen zur Drehachse angeordneten Emitteranordnungen gleichzeitig bedruckt werden. Die einzelnen Emitteranordnungen sind in diesem Fall bevorzugt jeweils als Modul oder Druckkopf ausgestaltet.

Dabei ist es sogar möglich, jedem Druckkopf jeweils seinen eigenen Druckpuffer zuzuordnen. Da die Reihen und Spalten der einzelnen Emitteranordnungen jeweils parallel zueinander verlaufen, können im Unterschied zu einer polaren Druckvorrichtung, bei der die Emitter auf radial zur Drehachse angeordneten Strahlen zueinander versetzt sind, die Emitteranordnungen bzw. Druckköpfe, die den unterschiedlichen Druckringen zugeordnet sind, baugleich ausgestaltet sein. Dies ermöglich eine einfache und kostengünstige Durchführung des Verfahrens. Wenn eine entsprechende Anzahl von Druckköpfen vorhanden ist, kann mit dem Verfahren eine Unterlage mit nahezu beliebig großer Oberfläche bedruckt werden. Bevorzugt grenzen zueinander benachbart angeordnete Druckringe derart aneinander an oder überdecken sich etwas, so dass in radialer Richtung eine lückenlose Bedruckung der Unterlage möglich ist.

Vorteilhaft ist, wenn die Emitterspalten der Emitteranordnung symmetrisch zu einer Radialebene angeordnet werden, die durch die Drehachse und eine Normale auf die Drehachse aufgespannt wird, derart, dass die Emitterspalten parallel zu dieser Radialebene verlaufen. Wenn die Emitteranordnung eine ungerade Anzahl von Emitterspalten hat, ist die Anordnung der Emitterspalten bevorzugt so, dass die mittlere Emitterspalte oder deren gerade Verlängerung durch die Drehachse verläuft. Wenn die Druckkopfanordnung eine gerade Anzahl von Emitterspalten hat, ist die Drehachse bevorzugt mittig zwischen den beiden innersten Emitterspalten bzw. deren geraden Verlängerungen angeordnet.

Bei einer anderen vorteilhaften Ausführungsform der Erfindung werden mindestens zwei Emitteranordnungen bereitgestellt, die bezüglich der Drehachse um einen Drehwinkel zueinander versetzt sind, wobei die Emitter der einzelnen Emitteranordnungen jeweils zum Auftragen von Materialportionen nach mindestens einem der Ansprüche 1 bis 9 gesteuert werden. Hierdurch kann die Unterlage bedruckt werden. Mit den einzelnen Emitteranordnungen können bei der Lösung gemäß Patentanspruch 1 unterschiedliche Materialien auf die Unterlage aufgetragen werden. Dabei werden die Emitteranordnungen bevorzugt im gleichen Abstand zur Drehachse angeordnet. Es ist aber auch möglich, mit den bezüglich der Drehachse um einen Drehwinkel zueinander versetzten Emitteranordnungen das gleiche Material auf die Unterlage aufzutragen. Dabei können die radialen Abstände zwischen den Emitteranordnungen und der Drehachse so gewählt werden, dass die Unterlage in radialer Richtung unterbrechungsfrei mit dem Material beschichtet werden kann.

Bevorzugt sind die innerhalb der Emitterspalten zueinander benachbarten Emitter in einem konstanten ersten Rasterstabstand zueinander versetzt, wobei zueinander benachbarte Emitterspalten jeweils in einem konstanten zweiten Rasterstabstand zueinander versetzt sind, und wobei der erste Rasterabstand um weniger als 20 Prozent, insbesondere um weniger als 10 Prozent von dem Produkt aus der Anzahl der Emitterspalten und dem zweiten Rasterabstand abweicht und insbesondere mit diesem Produkt übereinstimmt. Hierdurch können Verzerrungen beim Drucken weiter reduziert werden.

Mit dem erfindungsgemäßen Verfahren können dreidimensionale Formgegenstände hergestellt werden. Hierzu werden bei dem Verfahren, bei dem das Material mit Hilfe von Düsen aufgetragen wird, mehrere Materialschichten des düsengängigen Materials übereinander aufgetragen, wobei der Abstand zwischen der Düsenanordnung und der Unterlage jeweils von Schicht zu Schicht um die Dicke der zuletzt aufgetragenen Materialschicht vergrößert und jede Materialschicht nach ihrem Auftragen jeweils verfestigt wird, bevor auf diese Materialschicht eine weitere Materialschicht aufgetragen wird. Wenn das Material ein vernetzbarer Polymerwerkstoff ist, kann das Verfestigen des Materials beispielsweise dadurch erreicht werden, dass es mit UV-Licht einer geeigneten Wellenlänge bestrahlt wird. Bei dem Verfahren nach Patentanspruch 2 werden zu Herstellen eines dreidimensionalen Formgegenstands mehrere Materialschichten des flüssigen, pastösen oder pulverförmigen Materials übereinander durch Bestrahlen mit der Emitteranordnung vollflächig und/oder bereichsweise verfestigt. Das Verfahren ermöglich ein schnelles und unterbrechungsfreies Auftragen einer Vielzahl von Materialschichten.

Nachfolgend sind Ausführungsbeispiele der Erfindung anhand der Zeichnung näher erläutert. Es zeigen:

Fig. 1    eine Vorrichtung zum schichtweisen Herstellen dreidimensionaler Festkörper-Formgegenstände durch Aufbringen von düsengängigem Material, wobei die Vorrichtung eine um eine Drehachse drehbare Unterlage aufweist, auf die eine Anzahl von Materialschichten für die Formgegenstände aufgebracht sind,

Fig. 2    eine Darstellung ähnlich Fig. 1, nachdem weitere Materialschichten aufgebracht wurden und die Unterlage gegenüber Fig. 1 abgesenkt wurde,

Fig. 3    eine schematische Aufsicht auf eine als Druckkopf ausgestalteten Emitteranordnung, die mehrere matrixförmig in Zeilen und Spalten angeordnete, als Düsen ausgestaltete Emitter umfasst, wobei die Lage der einzelnen Austrittsöffnungen der Emitter jeweils durch einen Kreis angedeutet ist und die Reihen, in denen die Austrittsöffnungen angeordnet sind, durch parallel zueinander verlaufende gerade Linien markiert sind,

Fig. 4    eine graphische Darstellung von Druckpunkten, die eine Schicht einer polaren Matrix eines Modells des dreidimensionalen Formgegenstands definieren, wobei die Druckpunkte in radial zur Drehachse angeordneten Reihen A bis I liegenden, und wobei in jeder Reihe jeweils mehrere Druckpunkte angeordnet sind,

Fig. 5A bis 5I    Darstellungen ähnlich Fig. 3, welche die über der zu bedruckenden Unterlage positionierte Emitteranordnung beim Drucken der in Fig. 4 dargestellten Druckpunkte zeigen, wobei die Unterlage in den Fig. 5A bis 5I an unterschiedlichen Triggerstellen relativ zur Emitteranordnung drehpositioniert ist, und wobei die Reihen der Matrix entsprechend Fig. 4 mit Buchstaben A bis I bezeichnet sind,

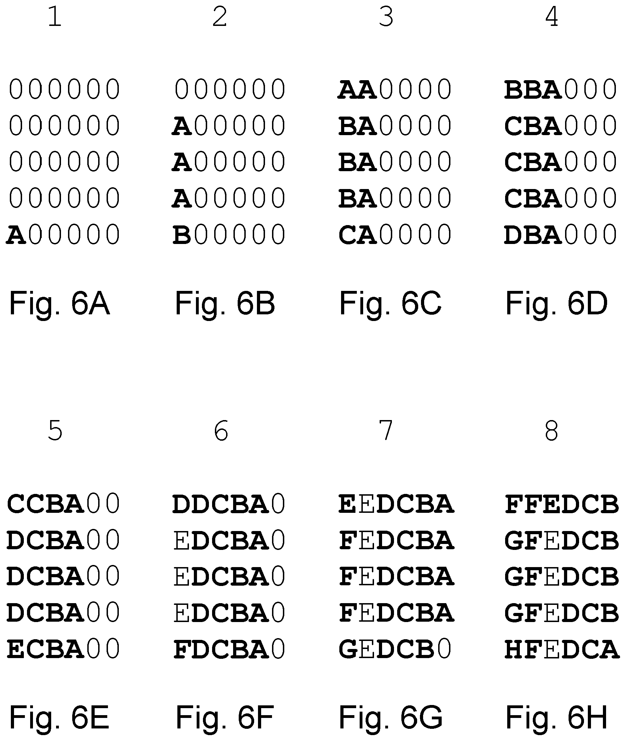

Fig. 6A bis 6H    eine schematische Darstellung von den einzelnen Triggerstellen zugeordneten Speicherinhalten eines Ringspeichers, in dem Aktivierungswerte für die einzelnen Emitter der Emitteranordnung abgelegt sind, wobei die Buchstaben A bis I die Reihen der Matrix bezeichnen, auf welcher der Druckpunkt liegt, der mit dem betreffenden Emitter gedruckt werden soll, wobei Buchstaben A bis I, die durch Fettdruck hervorgehoben sind, anzeigen, dass der betreffende Emitter an der betreffenden Triggerstelle aktiviert soll, und wobei Buchstaben E, 0, die nicht fettgedruckt sind, anzeigen, dass der betreffende Emitter an der Triggerstelle nicht aktiviert werden soll,

Fig. 7B bis 7I    den Inhalt des Ringspeichers nach dem zyklischen Vertauschen der in Fig. 6A bis 6H dargestellten Speicherinhalte des Ringspeichers und dem Überschreiben des zuerst in den Ringspeicher eingelesenen Speicherinhalts gemäß Fig. 6A mit Aktivierungswerten für eine weitere Triggerstelle,

Fig. 8A bis 8H    eine Darstellung ähnlich Fig. 5A bis 5H, wobei jedoch die vollflächig schwarzen Kreise die Stellen markieren, an denen gemäß dem Speicherinhalt des Ringspeichers in dem in der Figur dargestellten aktuellen oder einem vorherigen Druckzyklus beim Triggern der Emitteranordnung ein Teilbereich des Formgegenstands erzeugt wurde, und wobei die Kreislinien Stellen markieren, an denen kein Teilbereich des Formgegenstands erzeugt wurde,

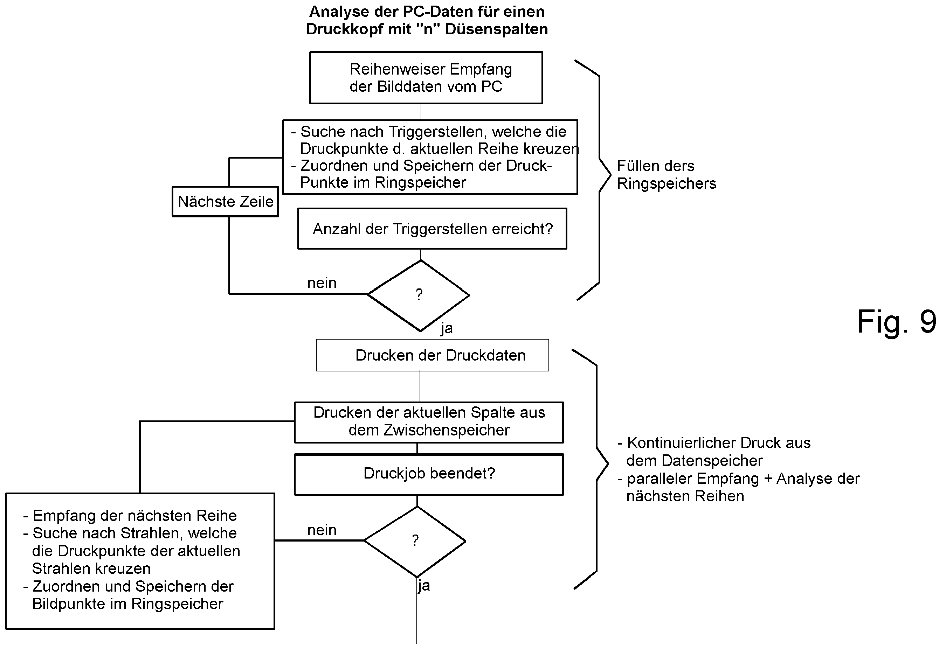

Fig. 9    eine Flussdiagramm, welches die Schritte verdeutlicht, die beim Verarbeiten von Geometriedaten für den Formgegenstand und beim Ansteuern der Emitteranordnung durchlaufen werden,

Fig. 10    die in Fig. 4 mit "A" bezeichnete Linie, die mit der in Fig. 1 und 2 gezeigten Vorrichtung gedruckt wurde, wobei auf der zu bedruckenden Unterlage erzeugte Teilbereiche des Formgegenstands durch vollflächig schwarze Kreise dargestellt und die Stellen, an denen die Teilbereiche des Formgegenstands gemäß den für das Drucken der Linie "A" verwendeten Geometriedaten auf die Unterlage aufgetragen werden sollen, durch Kreislinien markiert sind,

Fig. 11    eine graphische Darstellung von in einer kartesischen Matrix vorliegenden Geometriedaten,

Fig. 12    das Druckergebnis, wenn die Geometriedaten aus Fig. 11 mit dem erfindungsgemäßen Verfahren gedruckt wurden,

Fig. 13    das Druckergebnis, wenn die Geometriedaten aus Fig. 11 mit einem nicht erfindungsgemäßen Verfahren gedruckt wurden, bei dem die Anzahl der Druckzyklen der Anzahl der Düsenspalten entspricht,

Fig. 14 und 15    eine Teilaufsicht auf die Unterlage einer Vorrichtung zum schichtweisen Herstellen dreidimensionaler Formgegenstände, wobei die Unterlage mehrere Emitteranordnungen aufweist, die unterschiedlichen Druckringen zugeordnet sind,

Fig. 16    eine Vorrichtung zum Herstellen dreidimensionaler Formgegenstände nach dem Stereolithographie-Vorbild, wobei die Vorrichtung einen Behälter hat, in dem eine drehbare Unterlage und ein durch Bestrahlung mit einer elektromagnetischen Strahlung verfestigbares Material angeordnet ist,

Fig. 17    einen Längsschnitt durch die Drehachse der in Fig. 16 gezeigten Vorrichtung, und

Fig. 18    eine Darstellung ähnlich Fig. 17, nachdem weitere Materialschichten verfestigt wurden und die Unterlage gegenüber Fig. 17 abgesenkt wurde.

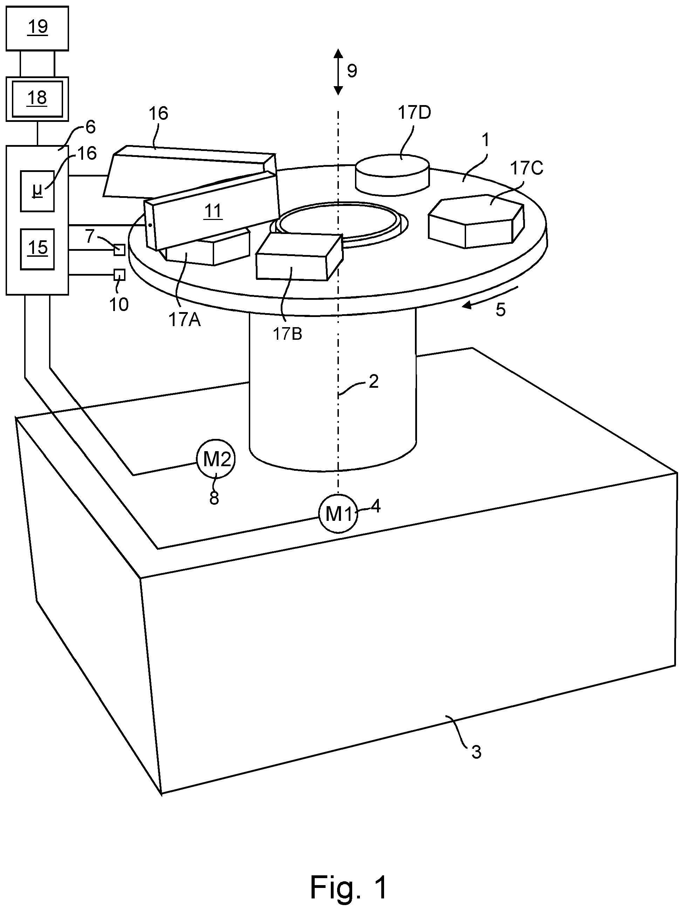

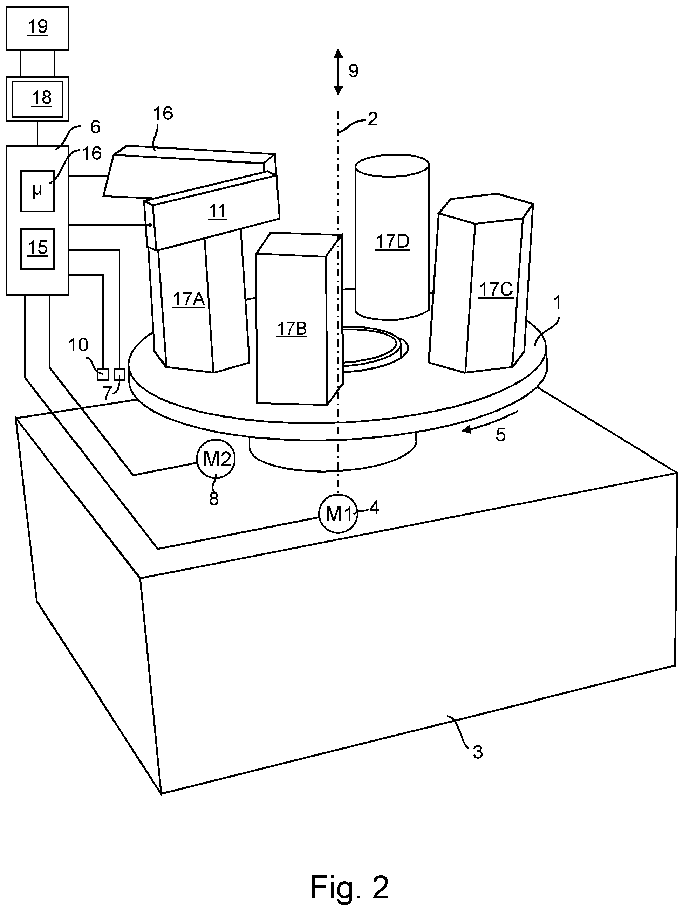

Bei einem Verfahren zum schichtweisen Herstellen eines Festkörper-Formgegenstands auf einer um eine Drehachse 2 drehbaren Unterlage 1 gemäß vorgegebener Geometriedaten wird ein die Unterlage 1 aufweisender kreisringförmiger Drehteller bereitgestellt, der um eine vertikale Drehachse 2 an einer ortsfesten Halterung 3 verdrehbar gelagert ist (Fig. 1 und 2). Die Halterung 3 hat an ihrer Unterseite eine Standfläche, mittels der sie beispielsweise auf einer Tischplatte oder auf dem Boden eines Raums aufstellbar ist.

Die Unterlage 1 steht mit einer ersten Positioniereinrichtung in Antriebsverbindung, die einen ersten Antriebsmotor 4 hat, mittels welchem die Unterlage 1 in Richtung des Pfeils 5 drehantreibbar und entsprechend einem von einer Ansteuereinrichtung 6 bereitgestellten Drehlagen-Sollwertsignal positionierbar ist. Der erste Antriebsmotor 5 ist zu diesem Zweck mit einem in die Ansteuereinrichtung 6 integrierten ersten Lageregler verbunden, der einen Encoder 7 zur Erfassung eines Drehlagesignals für die Unterlage 1 aufweist. Mit Hilfe der ersten Positioniereinrichtung kann die Unterlage 1 kontinuierlich und ohne anzuhalten über nahezu beliebige Winkel von mehr als 360° relativ zur Halterung 3 um die Drehachse 2 gedreht werden.

Die Unterlage 1 steht außerdem mit einer zweiten Positioniereinrichtung in Antriebsverbindung, die einen zweiten Antriebsmotor 8 hat, mittels welchem die Unterlage 3 in Richtung des Doppelpfeils 9 relativ zu der Halterung 3 auf- und ab verschiebbar und entsprechend einem von der Ansteuereinrichtung 6 bereitgestellten Höhenlagen-Sollwertsignal positionierbar ist (Fig. 1 und 2). Die Positionierung kann schrittweise oder kontinuierlich erfolgen. Der zweite Antriebsmotor 10 ist zu diesem Zweck mit einem in die Ansteuereinrichtung 6 integrierten zweiten Lageregler verbunden, der einen Lagesensor 10 zur Erfassung der Höhenlage der Unterlage 1 aufweist.

Zur Durchführung des Verfahrens wird außerdem eine Emitteranordnung 11 bereitgestellt, die als Druckkopf ausgestaltet ist, der eine Anzahl von 30 mit steuerbaren Ventilen oder Pumpen versehenen Emittern 12 hat, die als Materialabgabedüsen ausgestaltet sind, aus denen jeweils Materialportionen (z.B. Tröpfchen) eines düsengängigen, härtbaren Materials abgebbar sind. Anstelle eines Druckkopfs kann auch eine andere Emittermatrix mit feststehenden Emittern verwendet werden. Das Material kann beispielsweise ein fotovernetzbares Polymer sein, das in einem in der Zeichnung nicht näher dargestellten Reservoir bevorratet ist, welches über Leitungen mit den Emittern 12 verbunden ist.

Die Austrittsöffnungen der Emitter 12 sind über der Unterlage 3 in einer parallel zu der Ebene der Unterlage 1 verlaufenden, von dieser beabstandeten Ebene angeordnet und matrixförmig in mehreren parallel zueinander angeordnete Emitterspalten 13 sowie parallel zueinander versetzen, quer zu den Emitterspalten 13 verlaufenden Emitterzeilen 14 relativ zueinander positioniert. In jeder Emitterspalte 13 und jeder Emitterzeile 14 sind jeweils mehrere Emitter 12 angeordnet.

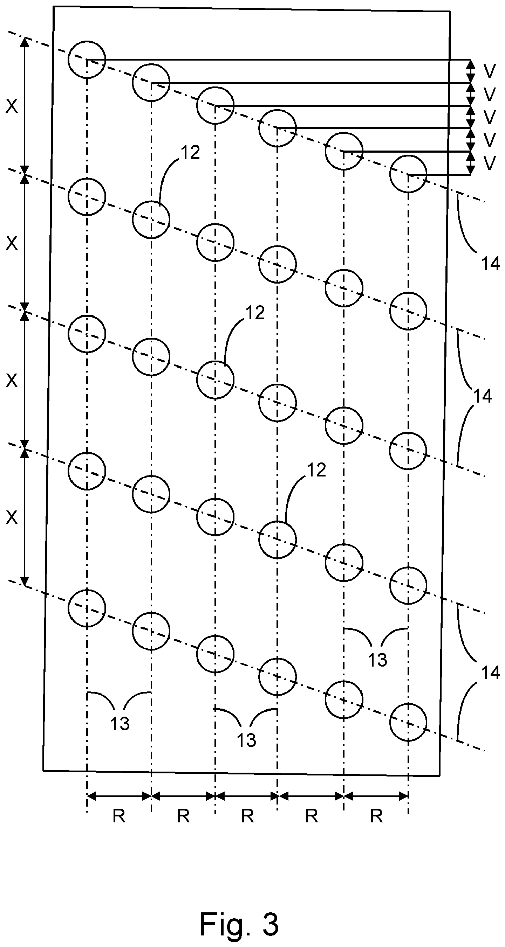

In den Emitterspalten 13 sind die Flächenschwerpunkte der Austrittsöffnungen der einzelnen Emitter 12 entlang parallel zueinander beabstandeter gerader Linien in konstanten Abständen X zueinander versetzt (Fig. 3). In Umfangsrichtung der Drehachse 2 zueinander benachbarte Emitterspalten 13 sind jeweils in Erstreckungsrichtung der Emitterspalten 13 um einen Versatz V zueinander versetzt. Der Versatz V ist derart gewählt, dass die einzelnen Emitter 12 der Emitteranordnung 11 in unterschiedlichen radialen Abständen DA(i) zur Drehachse 2 angeordnet sind. Für die radialen Abstände gilt:

$$DA(i) > DA(i + 1), \qquad i \in [1 \, .. \, 29]$$

Der erste Emitter 12 hat also den größten Abstand zur Drehachse 2 und der dreißigste Emitter 12 hat den kleinsten Abstand zur Drehachse 2.

Die Emitteranordnung 11 ist mit einem Druckpuffer 15 verbunden, in dem für jeden Emitter 12 der Emitteranordnung 11 jeweils ein Aktivierungswert zwischengespeichert werden kann. Der Aktivieurngswert kann beispielsweise den logischen Wert "1" oder den logischen Wert "0" haben.

Außerdem hat die Emitteranordung 11 einen Triggereingang, an den ein Triggersignal angelegt werden kann. Bei jedem Trigger, der am Triggereingang empfangen wird, geben alle Emitter 12 der Emitteranordnung 11, für die im Druckerpuffer 15 jeweils der Aktivierungswert "1" abgelegt ist, eine Materialportion ab. Emitter 12, für die im Druckerpuffer der Aktivierungswert "0" abgelegt ist, werden beim Empfangen eines Triggers nicht betätigt, d.h. diese Emitter 12 geben keine Materialportion ab.

Zum Verfestigen bzw. zum Vernetzen einer auf die Unterlage 1, einer darauf befindlichen Materialschicht und/oder einen auf der Unterlage 1 befindlichen Schichtstapel mit mehreren mittels der Emitteranordnung 11 aufgebrachten Materialschicht wird eine UV-Lichtquelle 16 bereitgestellt, die so an der Unterlage 1 positioniert wird, dass sie mit ihrer Abstrahlseite der Unterlage 1 zugewandt ist.

Mit Hilfe der die Unterlage 1, die Emitterenanordnung 2, die Ansteuereinrichtung 6 und die UV-Lichtquelle 16 aufweisenden Vorrichtung, können durch schichtweises Auftragen und Verfestigen einer Vielzahl von Materialschichten des düsengängigen Materials auf die Unterlage 1 aufgebracht werden, um dreidimensionale Festkörper-Formgegenstände 17A, 17B, 17C, 17D herzustellen.

Die Ansteuereinrichtung 6 ist mit einem übergeordneten Computer 18, wie zum Beispiel einem PC, verbunden, der einen Datenspeicher 19 aufweist, in dem für die einzelnen Materialschichten Geometriedaten abgelegt sind. Den Geometriedaten sind Druckpunkte zugeordnet, die in einer polaren Matrix mit mehreren nebeneinander verlaufenden Reihen 20 angeordnet sind, deren gerade Verlängerung jeweils die Drehachse 2 schneidet. In Umfangsrichtung der Drehachse 2 zueinander benachbarte Reihen 20 sind jeweils in einem Winkelabstand W zueinander versetzt. In jeder Reihe 20 ist jeweils eine Anzahl von 30 Druckpunkten angeordnet, die derart zueinander versetzt sind, dass für den radialen Abstand PA(j) des j-ten Druckpunkts $P_j$ gilt:

$$PA(j) > PA(j + 1), \qquad mit \; j \in [1 \, .. \, 29]$$

Der erste Druckpunkt $P_1$ hat also den größten Abstand zur Drehachse 2 und der dreißigste Druckpunkt

$P_{30}$ hat den kleinsten Abstand zur Drehachse 2.

Die Geometriedaten können beispielsweise mittels einer CAD-Software bereitgestellt werden, die auf dem Computer 18 ablaufbar ist. Auf dem Computer 18 ist ferner eine Software ausführbar, welche aus den Geometriedaten für den Formgegenstand die Geometriedaten für die einzelnen Schichten der Formgegenstände 2A, 2B, 2C, 2D generiert. Zum Laden der Geometriedaten in den Druckpuffer 14 ist der Computer 18 mit der Ansteuereinrichtung 6 verbunden.

Jeder in den Geometriedaten hinterlegte Druckpunkt $P_k$, für den Material auf die Unterlage 1 abgegeben werden soll, wird jeweils einem Emitter 12 der Emitteranordnung 11 zugeordnet, mit der das für den Druckpunkt $P_k$ vorgesehene Material auf die Unterlage 1 bzw. eine darauf befindliche verfestigte Materialschicht aufgetragen wird. Die Zuordnung erfolgt entsprechend der oben für die Emitter 12 und die Druckpunkte angegebenen Nummerierungen so, dass jeweils die Nummer des Emitters 12 mit der Nummer des Druckpunkts $P_k$ übereinstimmt. Der Druckpunkt $P_k$ wird als jeweils mit demjenigen Emitter 12 gedruckt, dessen Abstand zur Drehachse 2 möglichst gut mit dem Abstand des Druckpunkts $P_k$ zur Drehachse 2 übereinstimmt.

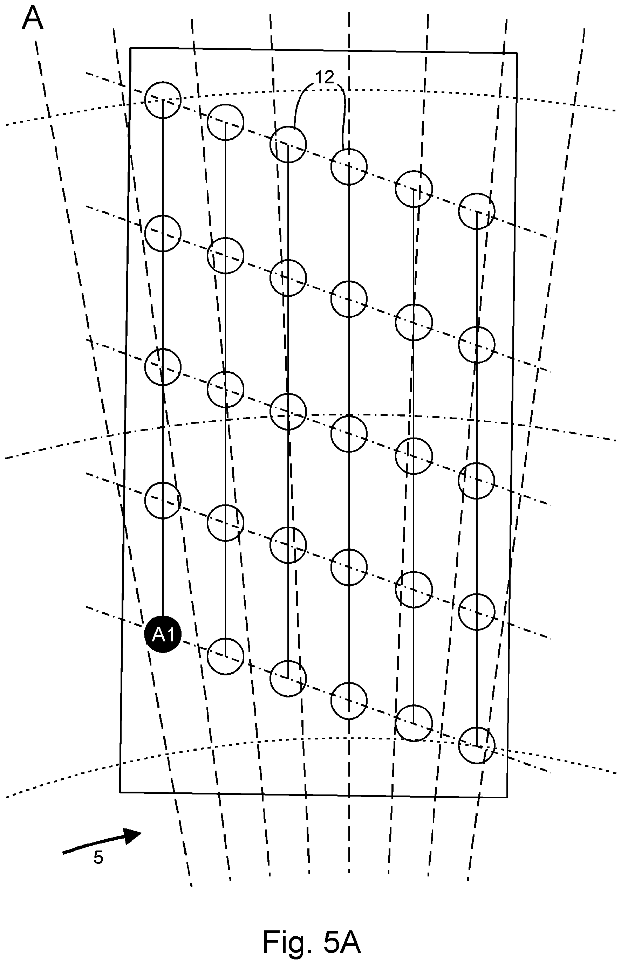

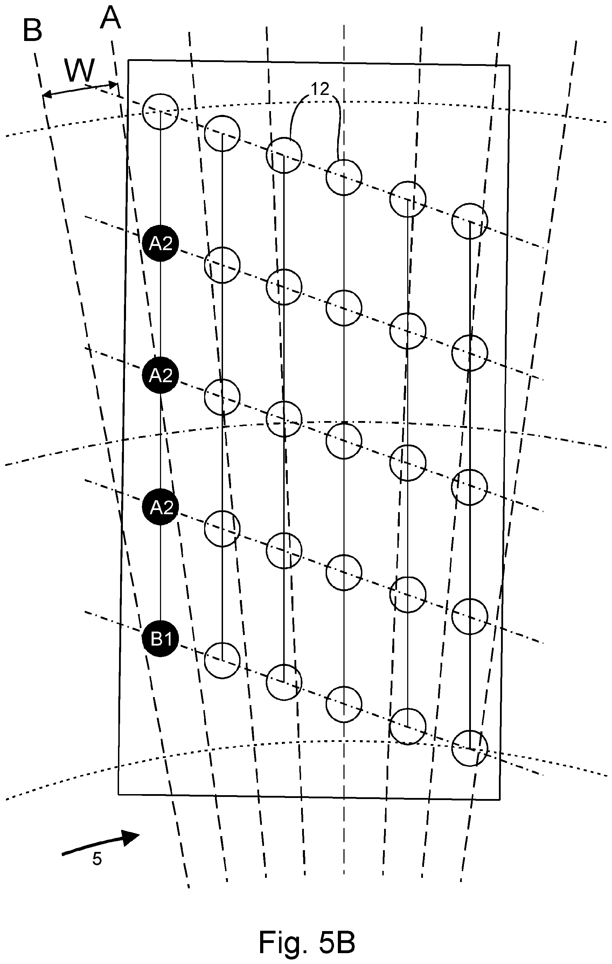

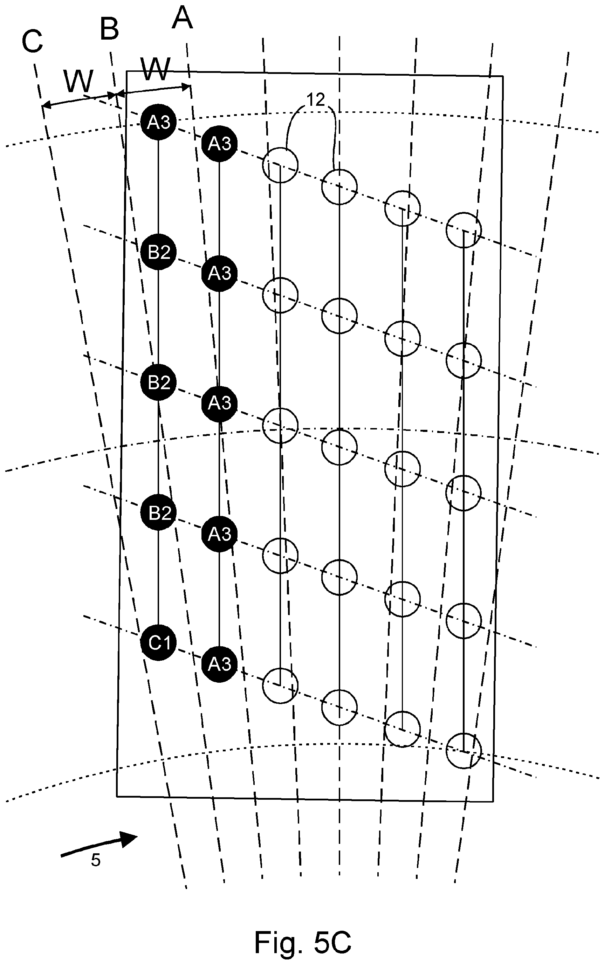

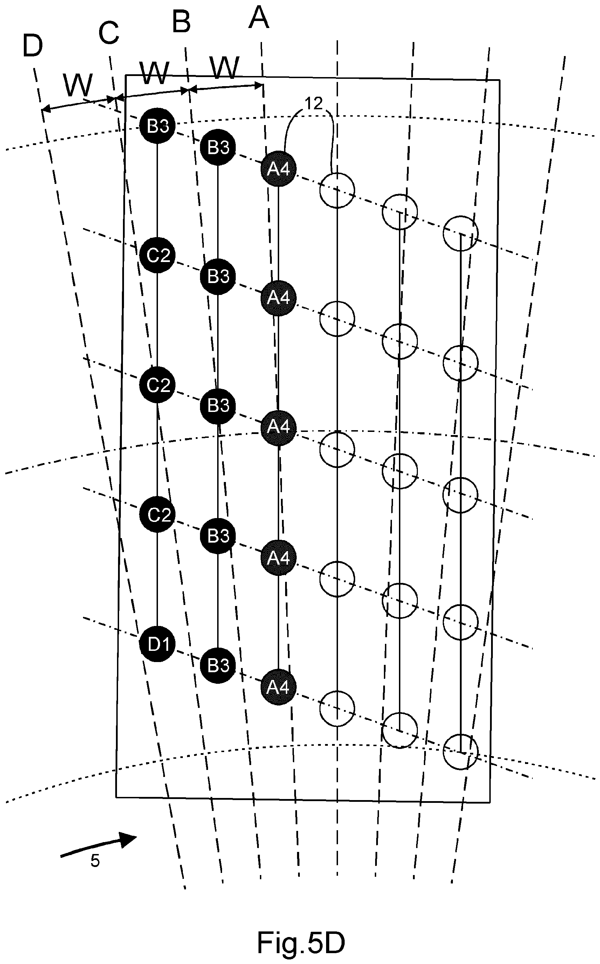

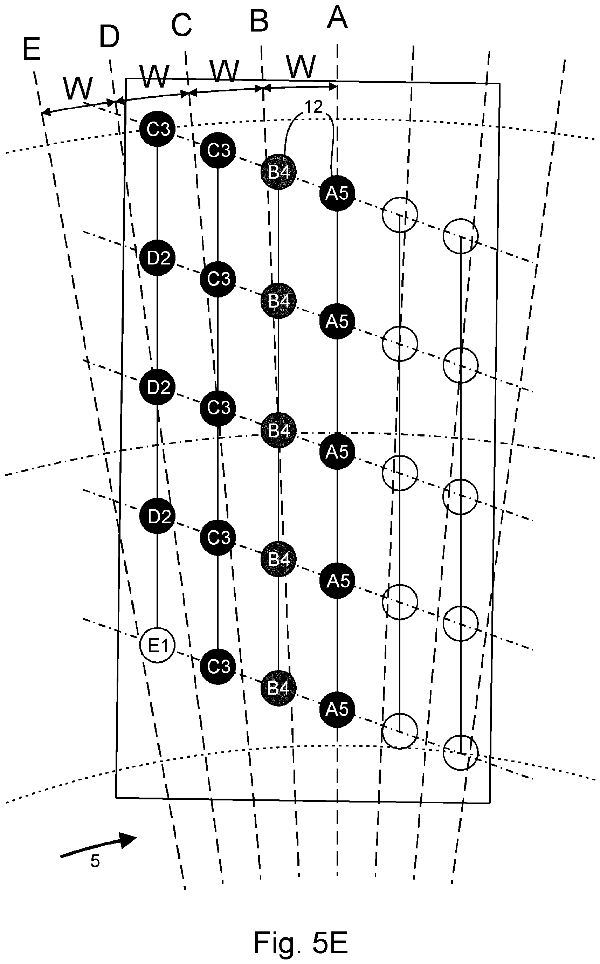

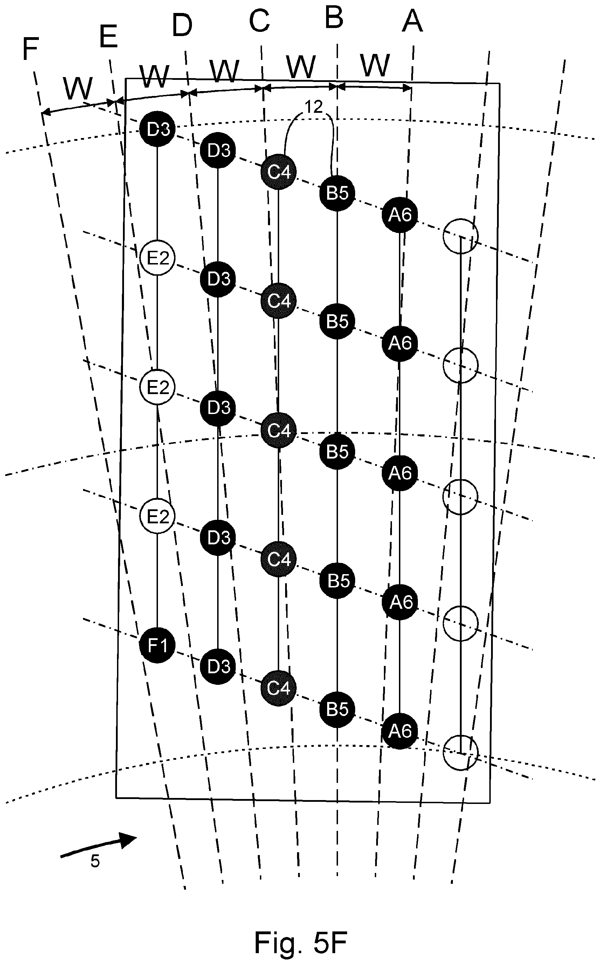

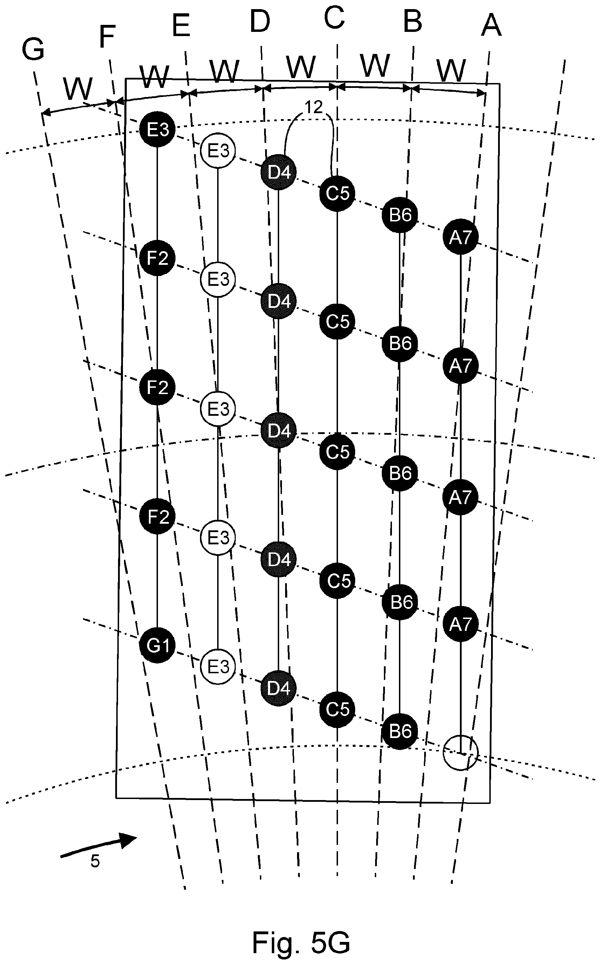

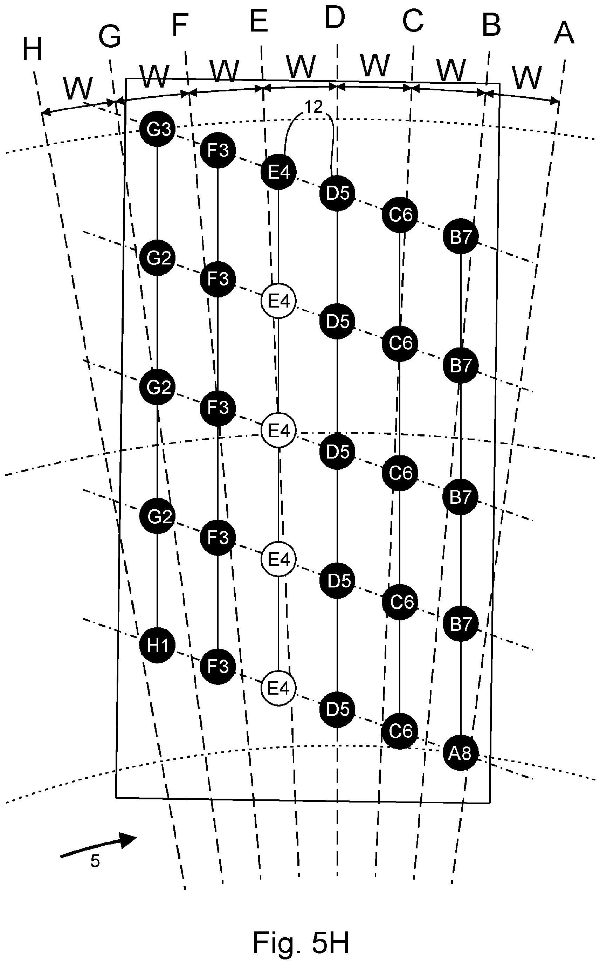

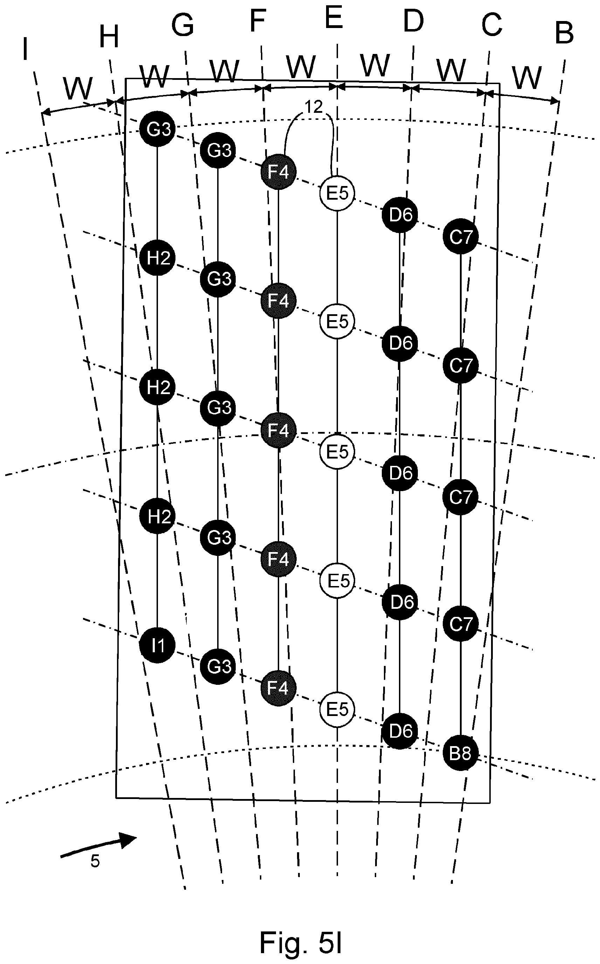

Die Abgabe der Materialportionen erfolgt in Druckzyklen, in denen die Emitteranordnung 11 zur Materialabgabe jeweils einmal an einer dem betreffenden Druckzyklus zugeordneten Triggerstelle A ... H getriggert wird, in welcher die Unterlage 1 jeweils in einer vorbestimmten Drehlage relativ zur Emitteranordnung 11 positioniert ist. Bei jedem Trigger geben alle Emitter 12 der Emitteranordnung 11, für die im Druckerpuffer 15 jeweils der Aktivierungswert "1" abgelegt ist, eine Materialportion ab. Die Unterlage 1 sowie die Emitteranordnung 11 werden jeweils von Druckzyklus zu Druckzyklus um den Winkelabstand W, den in Umfangsrichtung der Drehachse 2 zueinander benachbarte Reihen 20 mit Druckpunkten gemäß den Geometriedaten haben, relativ zueinander versetzt. Wie in Fig. 5A bis 5I zu sehen ist, erfolgt der Druck aller zu druckenden Druckpunkte $P_1 ... P_{30}$ einer Reihe jeweils in 8 Druckzyklen. Die Anzahl der Druckzyklen ist also größer als die Anzahl Emitterspalten 13 der Emitteranordnung 11.

Außer einem Emitter 12 wird jeder zu druckende Druckpunkt $P_k$ (mit $k \in [1 .. 30]$) jeweils auch einem der acht Druckzyklen zugeordnet. Die Zuordnung erfolgt in der Weise, dass der Winkelunterschied zwischen der Drehposition der Triggerstelle A ... H des Druckzyklus und der Drehposition, in welcher zu druckender Druckpunkt $P_k$ ($k \in [1 .. 30]$) in Bezug zu der Drehachse 2 angeordnet ist, wenn die die Unterlage 1 relativ zur Emitteranordnung 11 an der Triggerstelle A ... H positioniert ist, betragsmäßig nicht größer ist als die Hälfte des Winkelabstands W zwischen den Triggerstellen A ... H. Für den Fall, dass ein Druckpunkt $P_k$ (mit $k \in [1 .. 30]$) genau mittig zwischen zwei Triggerstellen angeordnet ist, wird der betreffende Druckpunkt $P_k$ einem dieser beiden Triggerstellen zugeordnet.

Aus den Fig. 5A bis 5I ist die Zuordnung der Druckpunkte $P_k$ zu den Emittern 12 in für die einzelnen Triggerstellen A ... H grafisch dargestellt. Emitter 12, die an der betreffenden Triggerstelle A ... H Material abgeben, sind durch ausgefüllte schwarze Kreise markiert. Emitter 12, die an der betreffenden Triggerstelle A ... H kein Material abgeben, sind in den Fig. 5A bis 5I durch Kreislinien markiert.

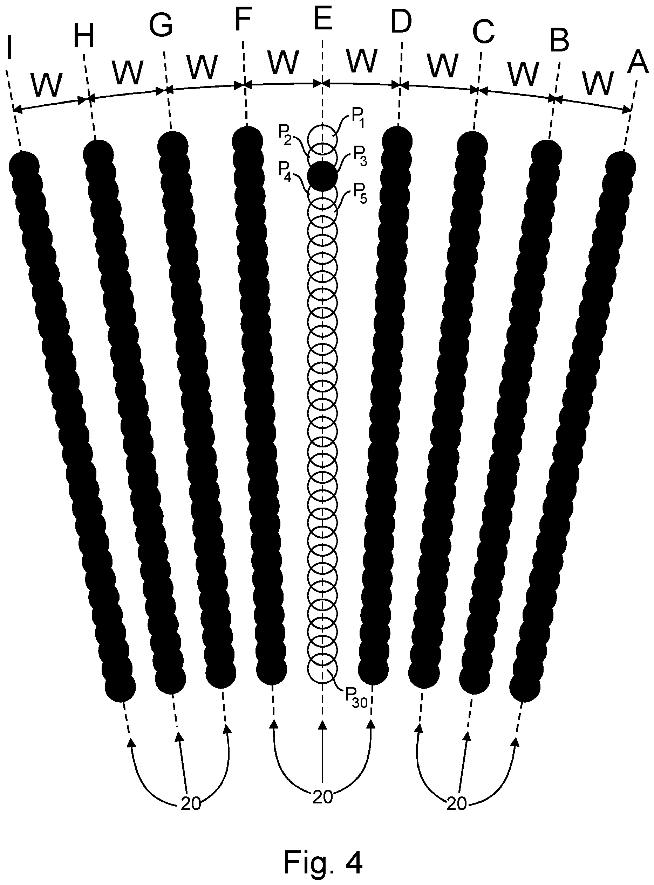

Die Buchstaben in diesen Kreisen geben an, zu welcher der in Fig. 4 abgebildeten Druckpunkt-Reihen A ... I der Druckpunkt gehört, welcher dem betreffenden Emitter 12 zugeordnet ist. Die Zahlen in den Kreisen geben an, in welchem Druckzyklus der Emitter 12 das Material für den Druckpunkt $P_k$ abgeben soll. Kreislinien, die weder Zahlen noch Buchstaben umgrenzen, markieren Emitter 12, denen seit dem Starten des Druckverfahrens noch kein Druckpunkt $P_k$ zugeordnet wurde.

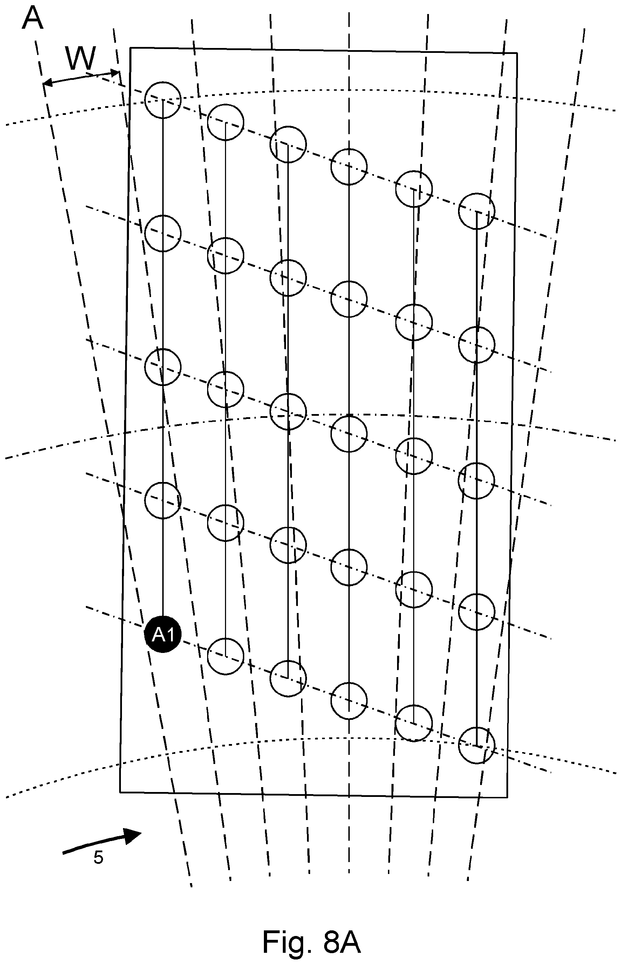

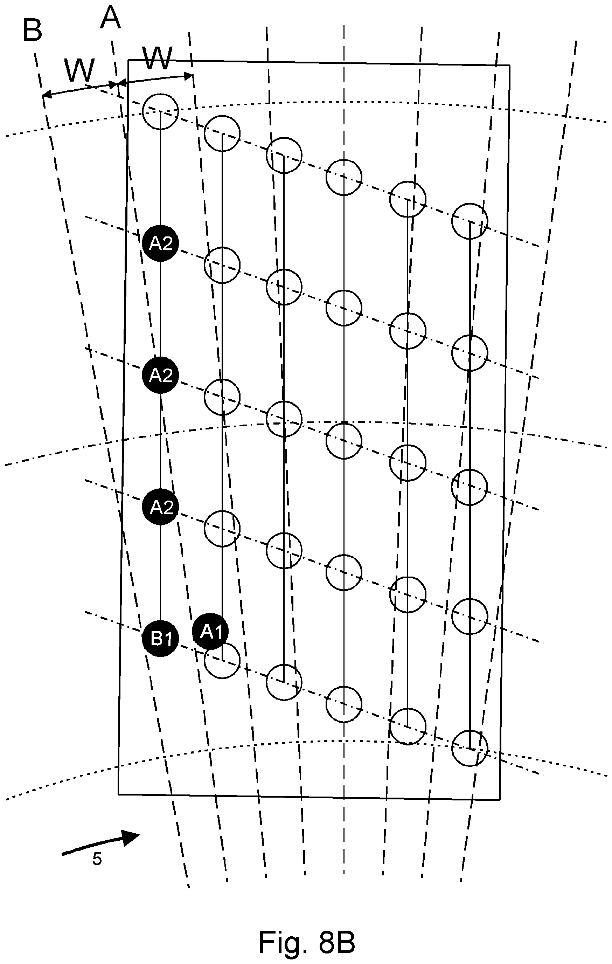

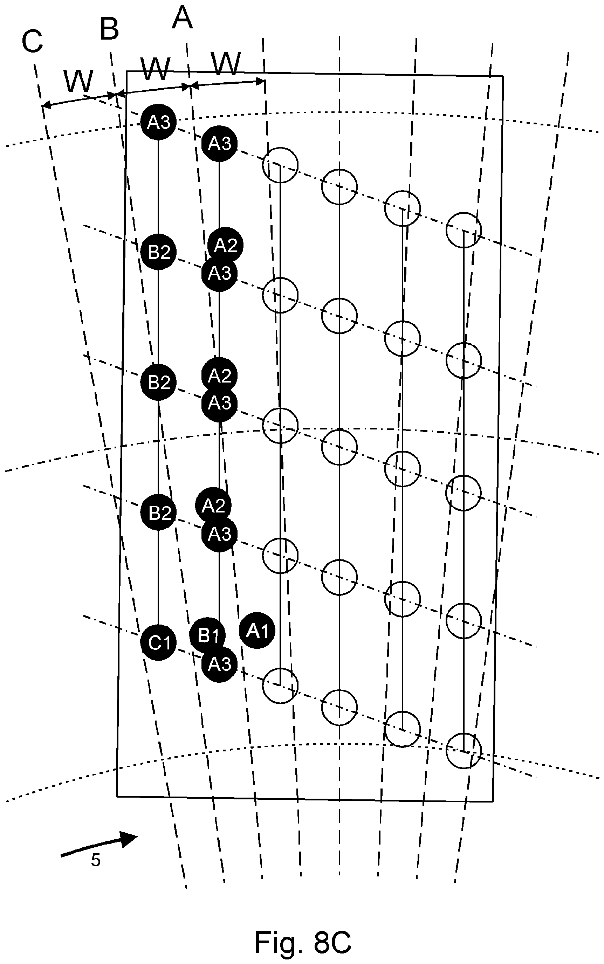

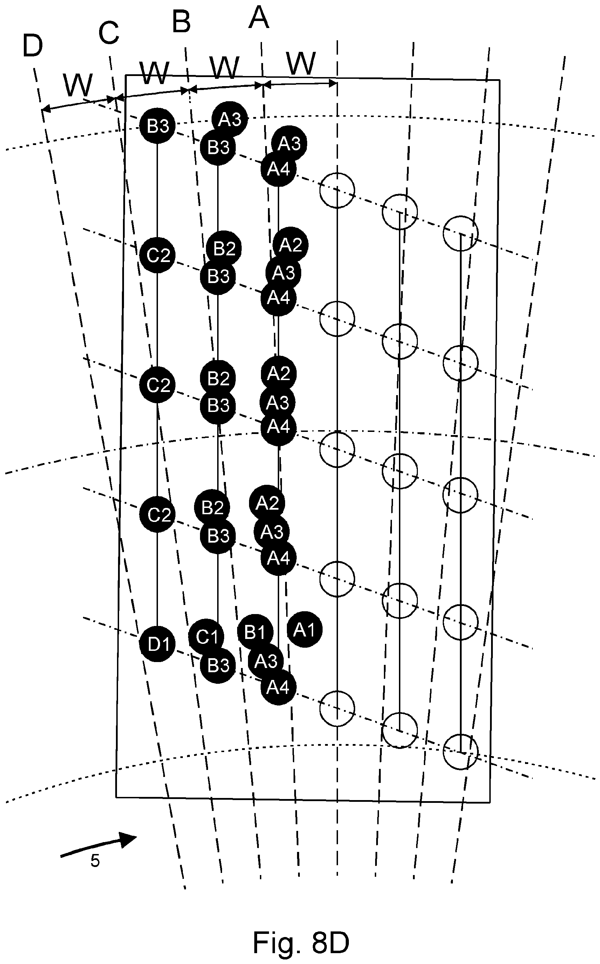

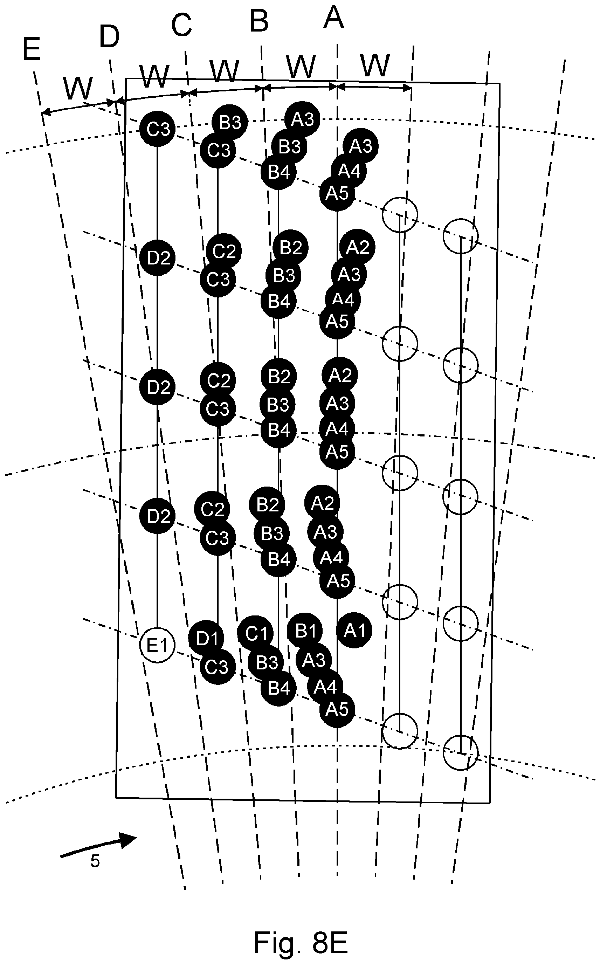

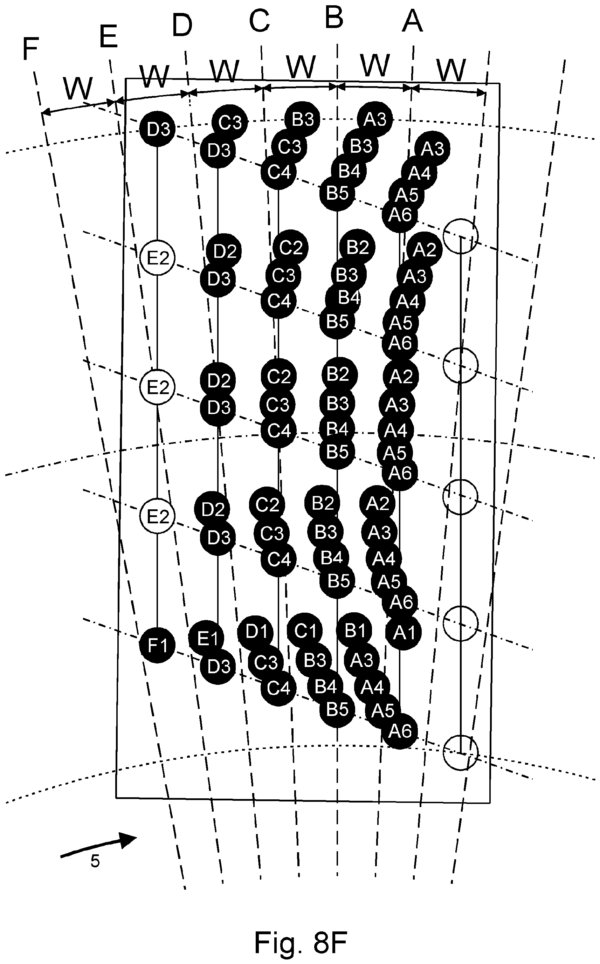

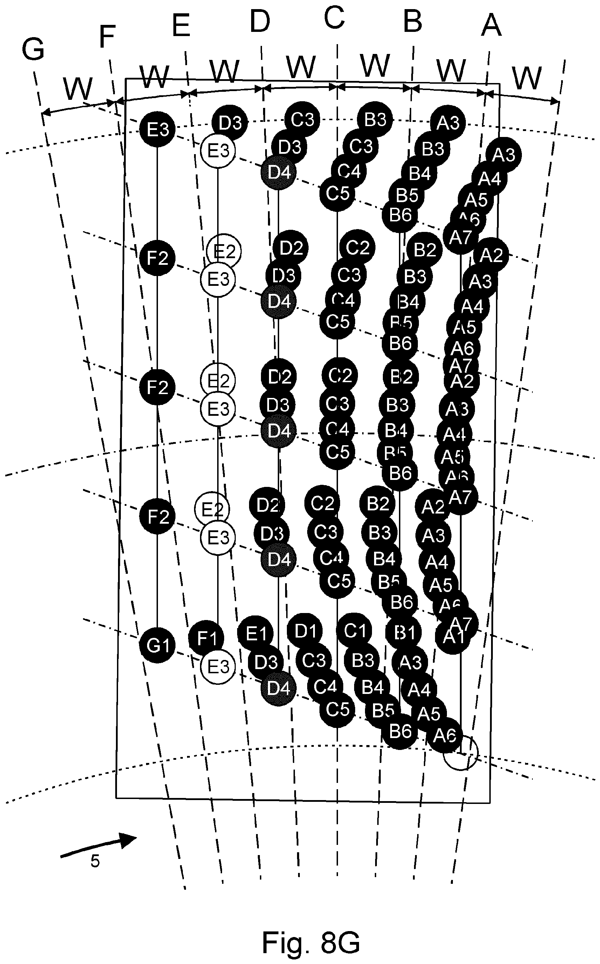

Die Figuren 8A bis 8H verdeutlichen den Stand des Materialauftrags an den einzelnen Triggerstellen A ... H. Die Bezeichnung der Druckpunkte, an denen Material auf die Unterlage 1 aufgetragen wurde, entspricht der Bezeichnung der Emitter 12 in den Fig. 5A bis 5I. An einer ersten Triggerstelle (Fig. 8A) wird nur an der mit "A1" bezeichneten Stelle Material auf die Unterlage 1 aufgetragen. In Fig. 8B wird zusätzlich an den mit "A2" und "B1" bezeichneten Stellen Material auf die Unterlage 1 aufgetragen. In Fig. 8C wird an zehn weiteren Stellen, die mit "A3", "B2" und "C1" bezeichnet sind, Material auf die Unterlage 1 aufgetragen usw.

Für die Zuordnung der Druckunkte $P_k$ zu den Triggerstellen A ... H wird ein Ringspeicher bereitgestellt, der acht Speicherplätze aufweist. Jeder dieser Speicherplätze wird jeweils einem der acht Druckzyklen zugeordnet. Jeder Speicherplatz umfasst jeweils 30 Speicherstellen, nämlich für jeden Emitter 12 der Emitteranordnung 11 einen.

Nachfolgend wird erläutert, wie die Daten während des Druckprozesses in dem Ringspeicher verarbeitet werden. Zunächst werden für eine erste Reihe 20 der Geometriedaten 30 Druckpunkte $P_k$ (mit k ∈ [1.. 30]) aus dem Datenspeicher ausgelesen. Diesen Druckpunkten $P_k$ wird jeweils - wie vorstehend beschrieben - eine der dreißig Emitter 12 zugeordnet. In den diesen Emittern 12 zugeordneten Speicherstellen des Ringspeichers wird jeweils ein Aktivierungswert abgelegt, der den logischen Wert "1" oder "0" hat. Dabei zeigt der Wert "1" an, dass der dem betreffenden Druckpunkt $P_k$ zugeordnete Emitter 12 in dem dem betreffenden Speicherplatz zugeordneten Druckzyklus betätigt bzw. aktiviert werden soll.

In einem weiteren Verfahrensschritt werden für eine weitere Reihe 20 von im Datenspeicher abgelegten Druckpunkten 30 Druckpunkte $P_k$ (mit k ∈ [1.. 30]) aus dem Datenspeicher ausgelesen. Jedem dieser Druckpunkte $P_k$ wird jeweils - wie vorstehend beschrieben - eine der dreißig Emitter12 zugeordnet. In den diesen Emittern 12 zugeordneten Speicherstellen des Ringspeichers wird jeweils ein Aktivierungswert abgelegt, der anzeigt, ob der dem betreffenden Druckpunkt $P_k$ zugeordnete Emitter 12 in dem dem betreffenden Speicherplatz zugeordnete Druckzyklus betätigt werden soll.

Die in den beiden letzten Absätzen genannten Schritte werden wiederholt, bis für alle acht Druckzyklen jeweils 30 Druckpunkte $P_k$ (mit k ∈ [1.. 30]) aus dem Datenspeicher ausgelesen wurden und für diese Druckpunkte entsprechende Aktivierungswerte im Ringspeicher abgelegt wurden (Fig. 6A bis 6H).

In einem weiteren Verfahrensschritt werden die Unterlage 1 und die Emitteranordnung an der dem Druckzyklus, in dessen Speicherplatz zuerst Aktivierungswerte abgelegt wurden, zugeordneten Triggerstelle A ... H relativ zueinander positioniert werden und die Emitter 12 der Emitteranordnung 11 werden in Abhängigkeit von den in diesem Speicherplatz abgelegten Aktivierungswerten angesteuert. Dabei wird jeder Emitter 12, für welchen für die betreffende Triggerstelle A ... H der Aktivierungswert "1" im Ringspeicher abgelegt wird betätigt. Emitter 12, für welche für die betreffende Triggerstelle A ... H nicht der Materialabgabewert "1" im Ringspeicher abgelegt wird, werden an dieser Triggerstelle A ... H nicht betätigt.

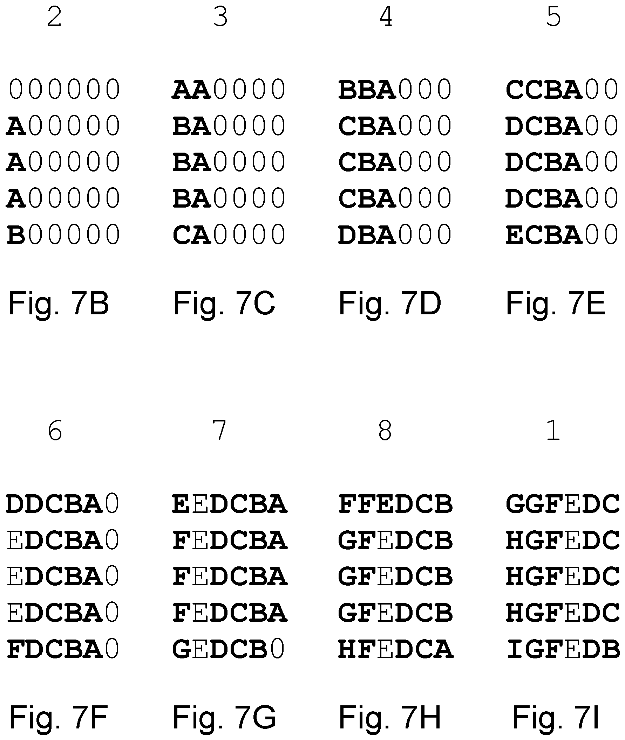

Nun wird geprüft, ob alle Reihen der zu druckenden Materialschicht bereits gedruckt wurden. Falls das nicht der Fall ist, werden die Speicherplätze derart zyklisch vertauscht, dass der Speicherplatz, dem die Triggerstelle A zugeordnet ist, an welcher die Unterlage 1 und die Emitteranordnung 11 zuletzt relativ zueinander positioniert wurden, der erste Speicherplatz ist (Fig. 7B bis 7I). Dann werden für eine weitere Reihe Geometriedaten aus dem Datenspeicher 19 eingelesen und in entsprechender Weise verarbeitet.

Nachdem alle Druckpunkt-Reihen der aktuellen Materialschicht gedruckt sind, wird geprüft, ob mindestens eine weitere Materialschicht gedruckt werden soll. Sollte dies der Fall sein, wird die Unterlage 1 um die Dicke der Materialschicht relativ zur Emitteranordnung 11 abgesenkt, um danach eine weitere Materialschicht wie vorstehend beschrieben zu drucken.

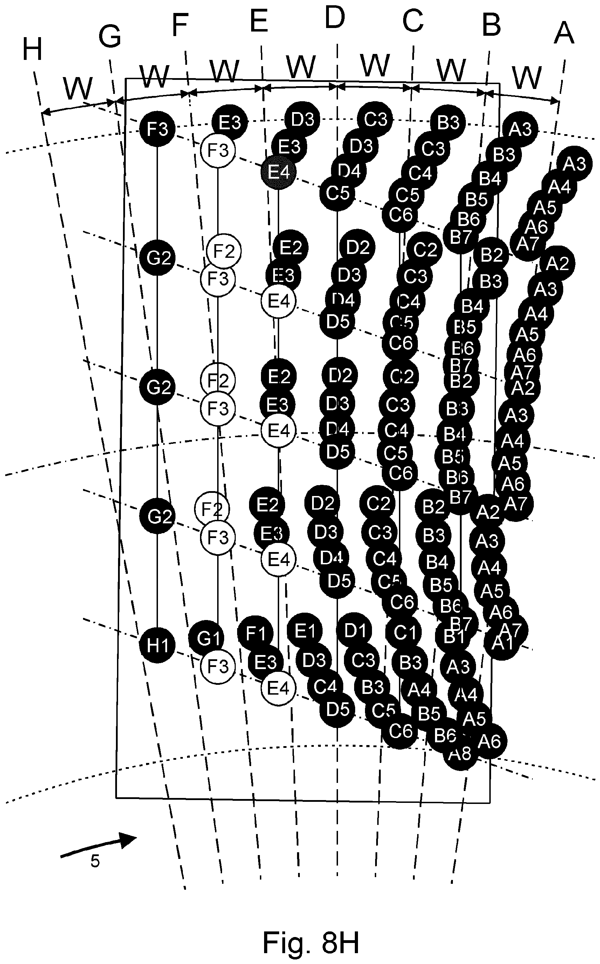

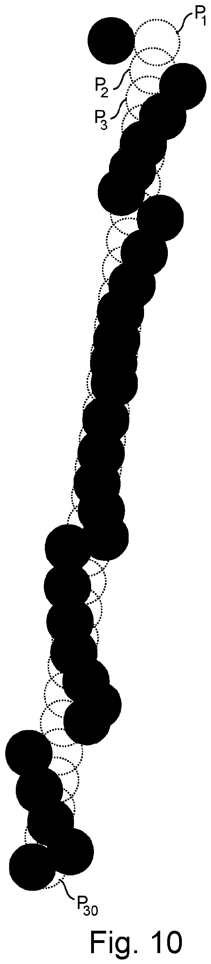

In Fig. 10 ist die nach dem Verfahren auf die Unterlage 1 gedruckte Geometriedaten-Reihe "A" aus Fig. 4 dargestellt. Die auf die Unterlage 1 abgegebenen Materialportionen sind durch vollflächig schwarze Kreise markiert. Diese Kreise sind auch in Fig. 8H rechts zu sehen, wo sie (von oben nach unten) mit A3, A3, A4, A5, A6, A7, A2, A3, A4 ... A5, A6, A8 bezeichnet sind. Die übrigen in Fig. 8H abgebildeten Kreise, die den Geometriedaten-Reihen "B" bis "I" aus Fig. 4 zugeordnet sind, sind in Fig. 10 aus Gründen der Übersichtlichkeit nicht dargestellt.

Stellen, an denen die Druckpunkte gemäß den für das Drucken der Reihe "A" aus Fig. 4 verwendeten Geometriedaten auf die Unterlage aufgetragen werden sollen, sind in Fig. 10 durch Kreislinien umrandet (Soll-Druckdaten). Wie zu sehen ist, wird im mittleren Teil der Linie eine gute Übereinstimmung des Druckergebnisses mit den Geometriedaten erreicht. An den Enden der Linie treten jeweils größere Abweichungen zwischen dem Druckergebnis und den Geometriedaten auf. Diese kommen hauptsächlich dadurch zustande, dass die Abstände zwischen den Emittern 12 der Emitteranordnung 11 und die Anordnung der Emitter 12 aus Gründen der besseren Lesbarkeit der Zeichnungen anders gewählt wurden, als das in der Praxis normalerweise der Fall ist. Für das erfindungsgemäße Verfahren wird eine Emitteranordnung 11 bevorzugt, die in radialer Richtung eine größere Abmessung aufweist als in Fig. 3. So kann beispielsweise die Emitteranordnung 11 in jeder Reihe 1024 statt der in Fig. 3 dargestellten fünf Emitter 12 aufweisen. Für das erfindungsgemäße, Verfahren wird außerdem eine Emitteranordnung 11 bevorzugt, bei der der Quotient aus der Abmessung, welche die Emitteranordnung 11 rechtwinklig zu ihrer Längsachse und parallel zur Ebene der Unterlage 1 hat, zum Innendurchmesser des bedruckbaren Bereichs der Unterlage 1 kleiner ist als es in Fig. 5A bis 5I dargestellt ist.

Wie in Fig. 4 zu sehen ist, wurden die Reihen mit den Druckpunkten aus Gründen der besseren Lesbarkeit der Zeichnungen außerdem so angeordnet, dass sie durch Zwischenräume voneinander beabstandet sind. Für das erfindungsgemäße Verfahren wird jedoch eine Matrix bevorzugt, bei der sich die Druckpunkte von zueinander benachbarten Reihen bereichsweise überdecken.

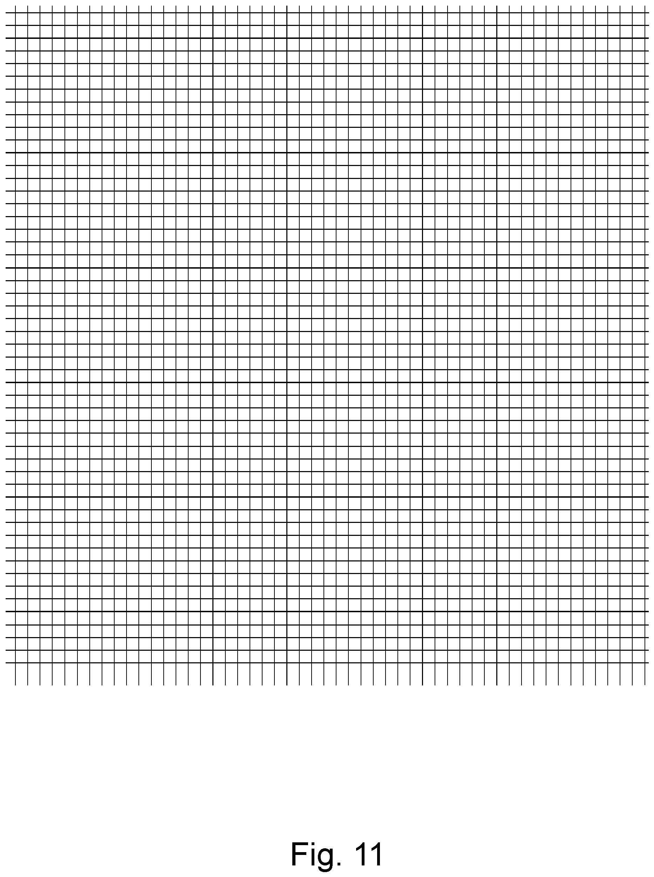

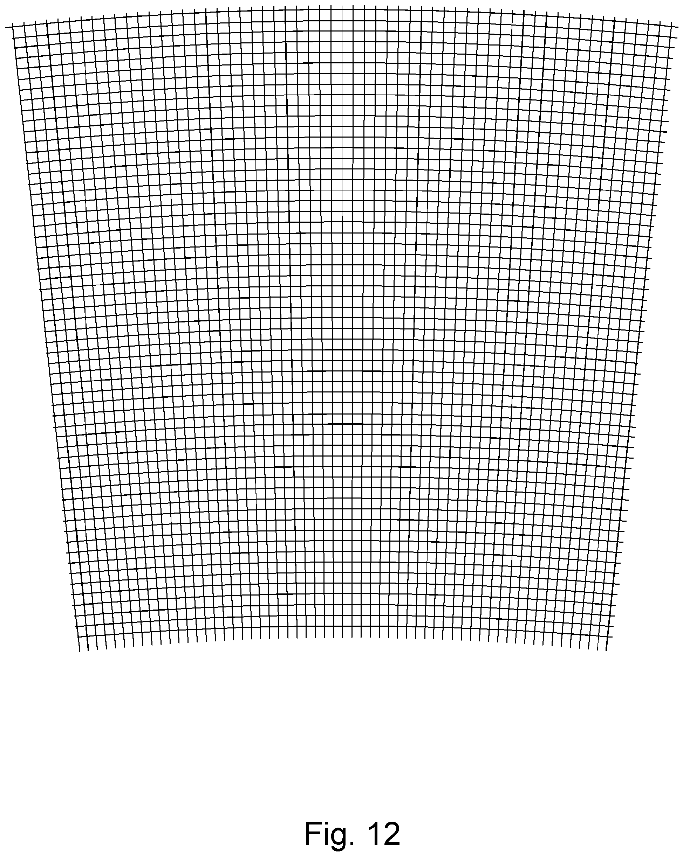

In Fig. 11 sind für ein weiteres Ausführungsbeispiel Geometriedaten zum Drucken eines kartesischen Linienmusters mit einer Vielzahl von rechtwinklig zueinander verlaufenden, sich kreuzenden Linien grafisch dargestellt. In Fig. 12 ist zu sehen, wie die mit dem erfindungsgemäßen Verfahren gedruckten Linien auf der Unterlage 1 angeordnet sind. Durch die unterschiedlichen Koordinatensysteme (kartesische Geometriedaten und polare Druckvorrichtung) ergeben sich Verzerrungen. Die Horizontalen Linien der Geometriedaten werden auf Kreislinien gedruckt und die vertikalen Linien der Geometriedaten verlaufen nach dem Drucken radial zur Drehachse. Trotz dieser Verzerrungen werden die einzelnen gedruckten Linien aber für das menschliche Auge weiterhin als einzelne Linien wahrgenommen.

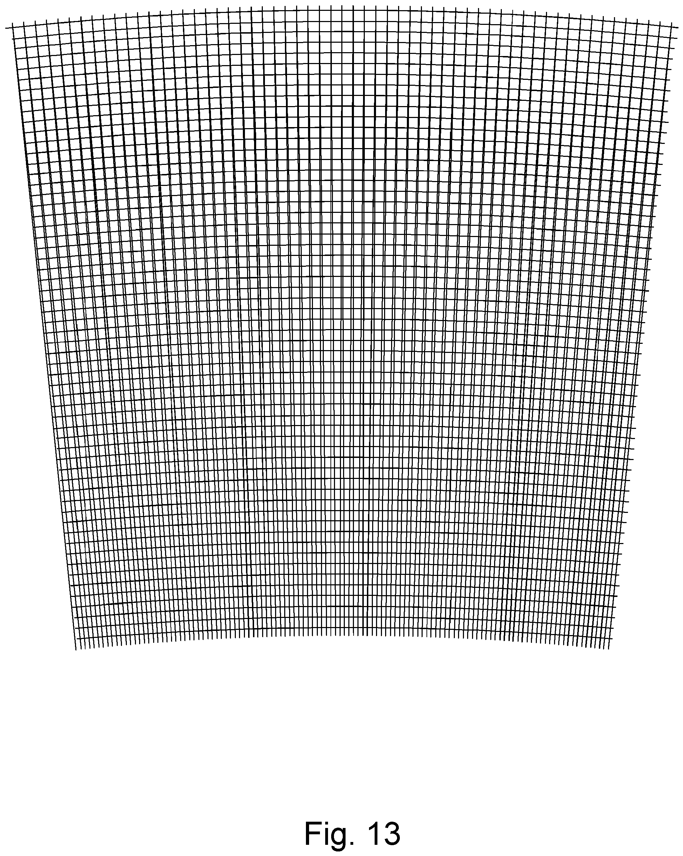

Fig. 13 zeigt das Druckergebnis, wenn die Geometriedaten aus Fig. 11 mit einem nicht erfindungsgemäßen Verfahren gedruckt werden, bei dem die Anzahl der Druckzyklen der Anzahl der Emittersplaten entspricht. Deutlich ist erkennbar, dass die vertikalen Linien aus Fig. 11 nach dem Drucken jeweils für das menschlichen Auge als zwei V-förmig angeordnete Linien erscheinen. Dieser Fehler kommt dadurch zu Stande, dass der unterschiedliche Umfang, den der zu druckende Bereich der Unterlage 1 an seinem inneren und äußeren Rand aufweist, bei Fig. 13 nicht kompensiert wurden. Dadurch werden die Emitter 12 insbesondere am inneren Rand der Unterlage nicht richtig getriggert.

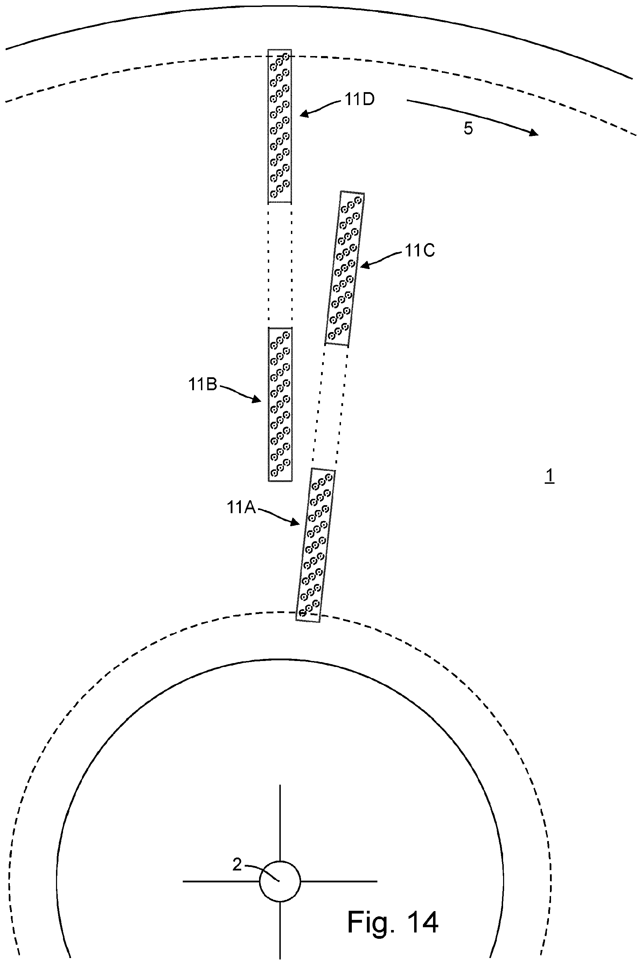

Bei dem in Fig. 14 gezeigten Ausführungsbeispiel werden zum Bedrucken von konzentrisch zur Drehachse 2 angeordneten, jeweils durch eine inneren und eine äußere Kreisbahn begrenzten Druckringen mehrere Emitteranordnungen 11A, 11B, 11C, 11D bereitgestellt. Die Emitteranordnungen 11A, 11B, 11C, 11D werden derart relativ zu der Drehachse 2 positioniert, dass sich der arithmetische Mittelwert der inneren und der äußeren Kreisbahn der Emitteranordnungen 11A, 11B, 11C, 11D voneinander unterscheiden. Jede der Emitteranordnungen 11A, 11B, 11C, 11D weist jeweils 27 Emitter 12 auf. Die Emitteranordnung 11A dient zum Drucken der Druckpunkte 1 ... 27, die Emitteranordnung 11B zum Drucken der Druckpunkte 28 ... 54, die Emitteranordnung 11C zum Drucken der Druckpunkte 55 ... 81 und die Emitteranordnung 11C zum Drucken der Druckpunkte 82 ... 108. Die Emitteranordnungen 11A und 11C sind in Bezug zu der Drehachse 2 in einer ersten Drehlage angeordnet und werden an derselben Triggerstelle getriggert. Die Emittersplaten 13 der Emitteranordnung 11A fluchten in gerader Linie mit den entsprechenden Emittersplaten 13 der Emitteranordnung 11C. Die Emitteranordnungen 11A und 11C sind also einander zugeordnet, was in Fig. 14 durch punktierte Verbindungslinien schematisch dargestellt ist.

Die Emitteranordnungen [1B und 11D sind in Bezug zu der Drehachse 2 in einer sich von der ersten Drehlage unterscheidenden zweiten Drehlage angeordnet. Die Emitteranordnungen [1B und 11D sind somit ebenfalls einander zugeordnet.

Diese Anordnung mit geteilt platzierten Druckköpfen bzw. Emitteranordnungen 11A bis 11D ergibt sich bei Verwendung von Emitteranordnungen 11A bis 11D, die in radialer Richtung eine geringe Druckbreite haben. Bei Verwendung eines Druckkopfs, dessen Druckbreite sich in radialer Richtung über die gesamte Drehtischbreite der Unterlage 1 erstreckt, würden die Emitteranordnungen 11A, 11B, 11C und 11D in einer Reihe platziert werden.

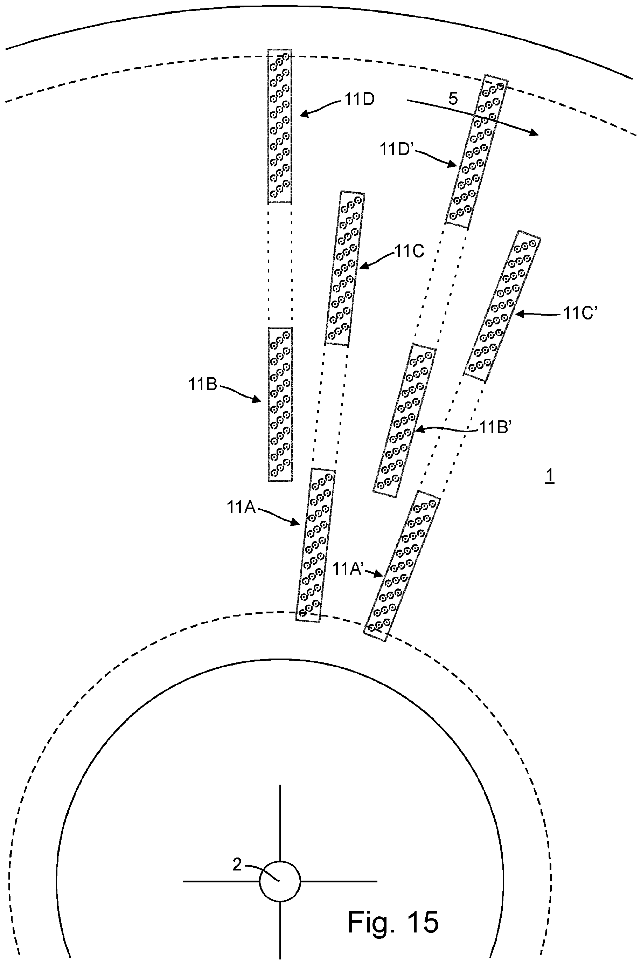

In Fig. 15 ist zu sehen, dass mehrere einander zugeordnete Emitteranordnungen 11A, 11C und 11A', 11C' bzw. 11B, 11D und 11B', 11D' in Umfangsrichtung der Drehachse 2 zueinander versetzt angeordnet werden können.

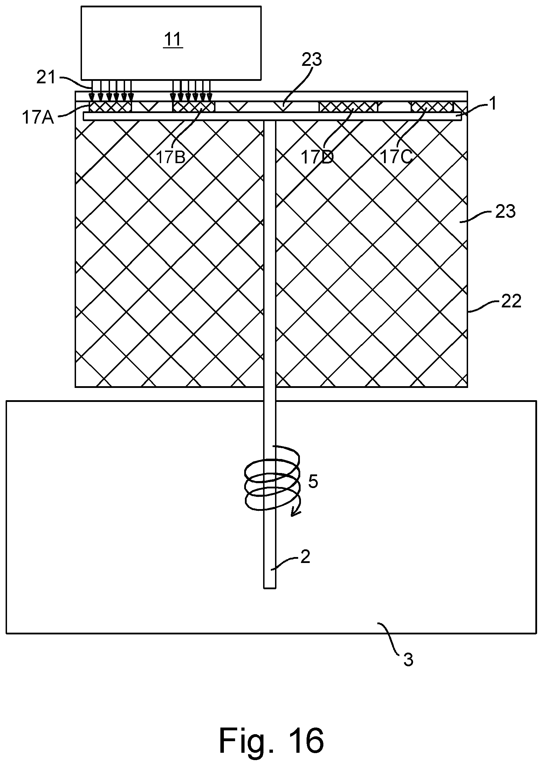

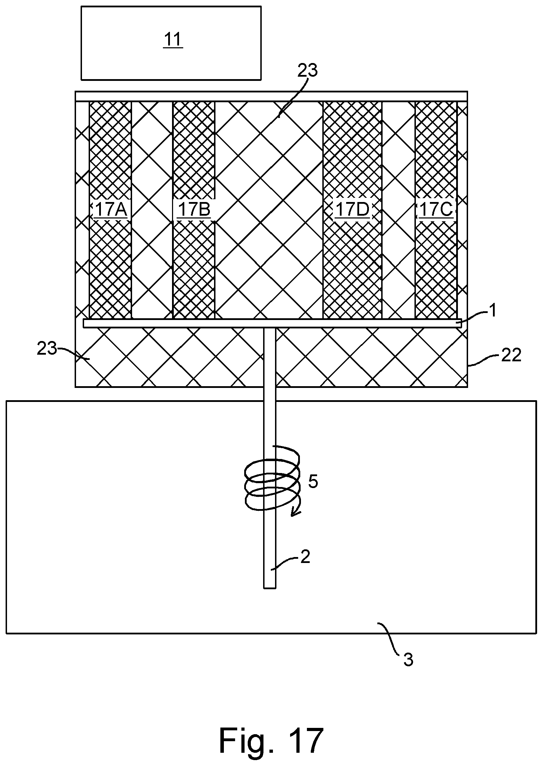

Bei einem in Fig. 16 bis 18 dargestellten Ausführungsbeispiel der Erfindung wird eine Vorrichtung bereitgestellt, die einen Behälter 22 aufweist, in dem ein flüssiges, pastöses oder pulverförmiges Material 23 auf eine Unterlage 1 aufgebracht wird. Zur Bestrahlung des Materials 23 mit einer energiereichen elektromagnetischen Strahlung 21 weist die Vorrichtung eine Emitteranordnung 11, 11A, 11B, 11C, 11D mit mehreren zueinander beabstandeten Strahlungs-Emittern 12 auf, die jeweils als Leuchtdioden ausgestaltet sind. Zur Bündelung bzw. Fokussierung der von den einzelnen Emittern 12 abgegebenen Strahlung 21 ist jeweils im Strahlengang der Emitter 12 eine in der Zeichnung nicht näher dargestellte Optik angeordnet.

Die Wellenlänge und die Leistung der mittels der Emitter 12 erzeugbaren elektromagnetischen Strahlung 21 sind derart auf das fließfähige Material 23 abgestimmt, dass dieses durch Bestrahlung mit der elektromagnetischen Strahlung 21 an der Bestrahlungsstelle verfestigt werden kann. Unter "verfestigen" wird bei einem flüssigen oder fließfähigen Material 23 verstanden, dass das Material 23 zu einem Festkörpermaterial gehärtet wird, insbesondere durch Vernetzen von in dem Material 23 enthaltenen Polymeren und/oder Copolymeren. Bei einem pulverförmigen Material 23 wird unter "verfestigen" verstanden, dass als Festkörperpartikel vorliegende Materialpartikel durch Bestrahlung mit der elektromagnetischen Strahlung 21 derart erhitzt und anschließend abgekühlt werden, das sie sich fest miteinander verbinden.

Die Emitteranordnung 11, 11A, 11B, 11C, 11D weist mehrere Emitterspalten 13A, 13B, 13C auf, in denen jeweils die Mittelpunkte der Emitter 12 in gerader Linie zueinander versetzt sind. Die Anordnung der Strahlungs-Emitter 12 entspricht der Anordnung der als Düsen ausgestalteten Emitter 12 in den Figuren 3, 5A bis 5I, 8A bis 8H, 14 und 15, so dass die Beschreibung zu den in diesen Figuren abgebildeten Emitteranordnungen 11, 11A, 11B, 11C, 11D für das Ausführungsbeispiel gemäß Fig. 16 bis 18 entsprechend gilt, jedoch mit dem Unterschied, dass die Emitter 12 bei dem Ausführungsbeispiel gemäß Fig. 16 bis 18 anstelle von Material Strahlung 21 abgeben, und dass die Strahlung 21 auf das fließfähige Material 23 gerichtet ist.

Die in dem Behälter 22 befindliche Unterlage 1 wird relativ zur Emitteranordnung 11, 11A, 11B, 11C, 11D um eine Drehachse 2 drehpositioniert und die mittels der Emitter 12 erzeugte Strahlung wird derart auf eine an der Oberfläche des Materials 23 befindliche Materialschicht gerichtet, dass das Material 23 an mindestens einer Bestrahlungsstelle verfestigt wird.

Die Emitteranordnung 11 ist mit einem Druckpuffer 15 verbunden, in dem für jeden Emitter der Emitteranordnung 11 jeweils ein Aktivierungssignal zwischengespeichert werden kann. Zur Ansteuerung der Strahlungs-Emitter 12 ist eine Ansteuereinrichtung vorgesehen, die einen Triggereingang aufweist. Bei jedem Trigger, der am Triggereingang empfangen wird, geben alle Emitter 12 der Emitteranordnung 11, für die im Druckerpuffer 15 jeweils der Wert "1" abgelegt ist, Strahlung 21 in Richtung auf das Material 23 ab. Emitter 12, für die im Druckerpuffer der Wert "0" abgelegt ist, werden beim Empfangen eines Triggers nicht betätigt, d.h. diese Emitter 12 geben keine Strahlung 21 ab. Die Fig. 6A bis 6H und 7B bis 7I, welche die Aktivierungssignalwerte für die Emitteranordnung 11 an den einzelnen Triggerstellen für die in Fig. 1 und 2 gezeigte Vorrichtung zeigen, gelten für das Ausführungsbeispiel in Fig. 16 bis 18 entsprechend.

Die Unterlage 1 steht bei dem in Fig. 16 bis 18 gezeigten Ausführungsbeispiel mit einer ersten Positioniereinrichtung in Antriebsverbindung, die einen ersten Antriebsmotor 4 hat, mittels welchem die Unterlage 1 in Richtung des Pfeils 5 drehantreibbar und entsprechend einem von einer Ansteuereinrichtung 6 bereitgestellten Drehlagen-Sollwertsignal positionierbar ist. Der erste Antriebsmotor 5 ist zu diesem Zweck mit einem in die Ansteuereinrichtung 6 integrierten ersten Lageregler verbunden, der einen Encoder 7 zur Erfassung eines Drehlagesignals für die Unterlage 1 aufweist. Mit Hilfe der ersten Positioniereinrichtung kann die Unterlage 1 kontinuierlich und ohne anzuhalten über nahezu beliebige Winkel von mehr als 360° relativ zur Halterung 3 um die Drehachse 2 gedreht werden.

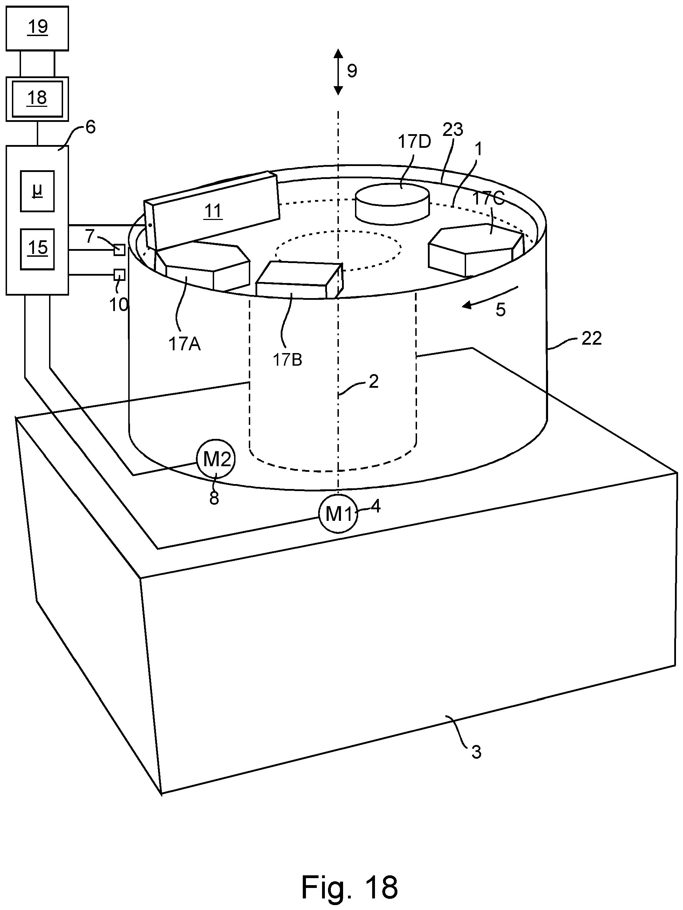

Die Unterlage 1 steht außerdem mit einer zweiten Positioniereinrichtung in Antriebsverbindung, die einen zweiten Antriebsmotor 8 hat, mittels welchem die Unterlage 1 in Richtung des Doppelpfeils 9 relativ zu der Halterung 3 auf- und ab verschiebbar und entsprechend einem von der Ansteuereinrichtung 6 bereitgestellten Höhenlagen-Sollwertsignal positionierbar ist (Fig. 18). Die Positionierung kann schrittweise oder kontinuierlich erfolgen. Der zweite Antriebsmotor 10 ist zu diesem Zweck mit einem in die Ansteuereinrichtung 6 integrierten zweiten Lageregler verbunden, der einen Lagesensor 10 zur Erfassung der Höhenlage der Unterlage 1 aufweist.

**Patentansprüche**

1. Verfahren zum Herstellen mindestens einer Festkörperschicht auf einer um eine Drehachse (2) drehbaren Unterlage (1) gemäß vorgegebener Geometriedaten

    a) wobei zur Abgabe von Materialportionen eines düsengängigen Materials auf eine Unterlage (1) eine Emitteranordnung (11, 11A bis 11D, 11A' bis 11D') mit einer Anzahl von N als Materialabgabedüsen ausgebildeten Emittern (12) bereitgestellt wird, die matrixförmig in parallel zueinander versetzten Emitterspalten (13) und parallel zueinander versetzen, quer zu den Emitterspalten (13) verlaufenden Emitterzeilen (14) angeordnet sind, wobei in Umfangsrichtung der Drehachse (2) zueinander benachbarte Emitterspalten (13) jeweils in Erstreckungsrichtung der Emitterspalten (13) derart zueinander versetzt sind, dass die einzelnen Emitter (12) der Emitteranordnung (11, 11A bis 11D, 11A' bis 11D') in unterschiedlichen radialen Abständen DA(i) zur Drehachse (2) angeordnet sind, wobei gilt:

$$DA(i) > DA(i+1)$$

    mit $i \in [1..(N-1)]$
    b) wobei den Geometriedaten Druckpunkte ($P_M ... P_M+_N$) zugeordnet sind, die in einer Matrix mit mehreren nebeneinander verlaufenden Reihen (20), in denen jeweils eine Anzahl von Q Druckpunkten angeordnet sind, derart zueinander versetzt sind, dass gilt:

$$PA(j) > PA(j+1),$$

mit $j \in [M ..(M + N - 1)]$ und $1 \le M \le Q - N$, wobei PA(j) der radiale Abstand des j-ten Druckpunkts $P_j$ der betreffenden Reihe (20) zur Drehachse (2) und M eine ganze Zahl ist,

c) wobei für Druckpunkte $P_k$, für die Material auf die Unterlage (2) abgegeben werden soll, jeweils mindestens eine Materialportion aus dem dem betreffenden Druckpunkt $P_k$ zugeordneten Emitter $D_k$ (12) der Emitteranordnung (11, 11A bis 11D, 11A' bis 11D') abgegeben wird, wobei k eine ganze Zahl zwischen M und M+N-1 ist,

d) **dadurch gekennzeichnet, dass** die Abgabe der Materialportionen in Druckzyklen erfolgt, in denen die Emitteranordnung zur Materialabgabe jeweils einmal an einer dem betreffenden Druckzyklus zugeordneten Triggerstelle (A bis H) getriggert wird und die Unterlage (1) sowie die Emitteranordnung (11, 11A bis 11D, 11A' bis 11 D') jeweils von Druckzyklus zu Druckzyklus um einen Winkelabstand (W) bezüglich der Drehachse (2) relativ zueinander versetzt werden,

e) wobei der Druck aller zu druckenden Druckpunkte $P_M ... P_{M+N-1}$ einer Reihe (20) in einer Anzahl von Druckzyklen erfolgt, die größer ist als die Anzahl der Emitterspalten (13),

f) wobei der Druckzyklus für jeden zu druckenden Druckpunkt jeweils derart gewählt wird, dass der Winkelunterschied zwischen der Drehposition der Triggerstelle (A bis H) des Druckzyklus und der Drehposition, in welcher der zu druckende Druckpunkt in Bezug zu der Drehachse (2) angeordnet ist, wenn die die Unterlage (1) relativ zur Emitteranordnung (11, 11A bis 11D, 11A' bis 11D') an der Triggerstelle (A bis H) positioniert ist, betragsmäßig nicht größer ist als die Hälfte des Winkelabstands (W) zwischen den Triggerstellen (A bis H).

2. Verfahren zum Herstellen mindestens einer Festkörperschicht auf einer um eine Drehachse (2) drehbaren Unterlage (1) gemäß vorgegebener Geometriedaten

a) **dadurch gekennzeichnet, dass** ein Behälter (22) bereitgestellt wird, in dem mindestens eine Materialschicht aus einem flüssigen, pastösen oder pulverförmigen Material (23) auf eine Unterlage (1) aufgebracht wird, wobei zur Bestrahlung des Materials (23) mit einer das Material (23) verfestigenden Strahlung eine Emitteranordnung (11, 11A bis 11D, 11A' bis 11D') mit einer Anzahl von N zueinander beabstandeten, der Materialschicht zugewandten Strahlungs-Emittern (12) bereitgestellt wird, die matrixförmig in parallel zueinander versetzten Emitterspalten (13) und parallel zueinander versetzen, quer zu den Emitterspalten (13) verlaufenden Emitterzeilen (14) angeordnet sind, wobei in Umfangsrichtung der Drehachse (2) zueinander benachbarte Emitterspalten (13) jeweils in Erstreckungsrichtung der Emitterspalten (13) derart zueinander versetzt sind, dass die einzelnen Emitter (12) der Emitteranordnung (11, 11A bis 11D, 11A' bis 11D') in unterschiedlichen radialen Abständen DA(i) zur Drehachse (2) angeordnet sind, wobei gilt:

$$DA(i) > DA(i+1)$$

mit $i \in [1..(N-1)]$

b) wobei den Geometriedaten Druckpunkte $(P_M ... P_M+_N)$ zugeordnet sind, die in einer Matrix mit mehreren nebeneinander verlaufenden Reihen (20), in denen jeweils eine Anzahl von Q Druckpunkten angeordnet sind, derart zueinander versetzt sind, dass gilt:

$$PA(j) > PA(j+1),$$

mit $j \in [M..(M + N - 1)]$ und $1 \le M \le Q - N$, wobei PA(j) der radiale Abstand des j-ten Druckpunkts $P_j$ der betreffenden Reihe (20) zur Drehachse (2) und M eine ganze Zahl ist,

c) wobei für Druckpunkte $P_k$, an denen der Festkörperschicht sein soll, jeweils aus dem dem betreffenden Druckpunkt $P_k$ zugeordneten Emitter $D_k$ (12) der Emitteranordnung (11, 11A bis 11D, 11A' bis 11D') Strahlung (21) auf das Material (23) abgegeben wird, wobei k eine ganze Zahl zwischen M und M+N-1 ist,

d) wobei die Bestrahlung des Materials (23) in Druckzyklen erfolgt, in denen die Emitteranordnung (11, 11A bis 11D, 11A' bis 11D') zur Bestrahlung jeweils einmal an einer dem betreffenden Druckzyklus zugeordneten Triggerstelle (A bis H) getriggert wird und die Unterlage (1) sowie die Emitteranordnung (11, 11A bis 11D, 11A' bis 11 D') jeweils von Druckzyklus zu Druckzyklus um einen Winkelabstand (W) bezüglich der Drehachse (2) relativ zueinander versetzt werden,

e) wobei der Druck aller zu druckenden Druckpunkte $P_M ... P_{M+N-1}$ einer Reihe (20) in einer Anzahl von Druckzyklen erfolgt, die größer ist als die Anzahl der Emitterspalten (13),

f) wobei der Druckzyklus für jeden zu druckenden Druckpunkt jeweils derart gewählt wird, dass der Winkelunterschied zwischen der Drehposition der Triggerstelle (A bis H) des Druckzyklus und der Drehposition, in welcher der zu druckende Druckpunkt in Bezug zu der Drehachse (2) angeordnet ist, wenn die die Unterlage (1) relativ zur Emitteranordnung (11, 11A bis 11D, 11A' bis 11D') an der Triggerstelle (A bis H) positioniert ist, betragsmäßig nicht größer ist als die Hälfte des Winkelabstands (W) zwischen den Triggerstellen (A bis H).

3. Verfahren nach Anspruch 1 oder 2, **dadurch gekennzeichnet, dass** die Matrix eine kartesische Matrix ist und die Reihen (20), in denen die Druckpunkte zueinander versetzt sind, parallel zueinander verlaufen.

4. Verfahren nach Anspruch 1 oder 2, **dadurch gekennzeichnet, dass** die Matrix eine polare Matrix ist und die Reihen (20), in denen die Druckpunkte zueinander versetzt sind radial zur Drehachse angeordnet sind, und dass vorzugsweise zueinander benachbarte Reihen (20) jeweils im Winkelabstand (W) der Triggerstellen (A bis H) zueinander versetzt sind.

5. Verfahren nach einem der Ansprüche 1 bis 4, **dadurch gekennzeichnet, dass** für eine der Anzahl der Druckzyklen entsprechende Anzahl von direkt aufeinanderfolgenden Triggerstellen (A bis H) jeweils für die betreffende Triggerstelle (A bis H) für jeden Druckpunkt $P_M$ ... $P_{M+N-1}$, für dessen Druck die Emitteranordnung (11, 11A bis 11D, 11A' bis 11D') eingerichtet ist, dem betreffenden Druckpunkt $P_M$ ... $P_{M+N-1}$ ein Druckzyklus zugeordnet wird, und dass danach entsprechend dieser Zuordnung jeweils für die einzelnen Reihen (20) jedem zu druckenden Druckpunkt $P_M$ ... $P_{M+N-1}$, für dessen Druck die Emitteranordnung (11, 11A bis 11D, 11A' bis 11D') eingerichtet ist, ein Druckzyklus zugeordnet wird und die Emitteranordnung (11, 11A bis 11D, 11A' bis 11D') jeweils beim Erreichen der dem betreffenden Druckzyklus zugeordneten Triggerstelle (A bis H) getriggert wird.

6. Verfahren nach einem der Ansprüche 1 bis 5, **dadurch gekennzeichnet,**

     a) **dass** ein Datenspeicher (19) bereitgestellt wird, in dem die Geometriedaten abgelegt werden,
     b) **dass** ein Ringspeicher bereitgestellt wird, der mindestens eine der Anzahl der Druckzyklen entsprechende Anzahl von Speicherplätzen aufweist, die jeweils eine der Anzahl (N) der Emitter (12) der Emitteranordnung (11, 11A bis 11D, 11A' bis 11D') entsprechende der Anzahl von Speicherstellen umfassen, von denen jede jeweils einem Emitter (12) zugeordnet ist,

     c) **dass** für eine der Anzahl der Druckzyklen entsprechende Anzahl von unmittelbar aufeinanderfolgenden Druckzyklen jedem dieser Druckzyklen jeweils einer der Speicherplätze zugeordnet wird,
     d) **dass** für eine erste Reihe (20) von im Datenspeicher (19) abgelegten Druckpunkten eine der Anzahl (N) der Emitter (12) der Emitteranordnung (11, 11A bis 11D, 11A' bis 11D') entsprechende der Anzahl von Druckpunkten, für deren Druck die Emitteranordnung (11, 11A bis 11D, 11A' bis 11D') eingerichtet ist, aus dem Datenspeicher (19) ausgelesen wird,
     e) **dass** für die den Druckpunkten der ersten Reihe (20) zugeordneten Emittern (12) in den den Emittern (12) zugeordneten Speicherstellen des Ringspeichers jeweils ein Aktivierungswert abgelegt wird, der anzeigt, ob der dem betreffenden Druckpunkt zugeordnete Emitter (12) in dem dem betreffenden Speicherplatz zugeordnete Druckzyklus aktiviert werden soll,
     f) **dass** für eine weitere Reihe (20) von im Datenspeicher (19) abgelegten Druckpunkten eine der Anzahl (N) der Emitter (12) der Emitteranordnung entsprechende der Anzahl von Druckpunkten, für deren Druck die Emitteranordnung (11, 11A bis 11D, 11A' bis 11D') eingerichtet ist, aus dem Datenspeicher (19) ausgelesen wird,
     g) **dass** für die den Druckpunkten der weiteren Reihe (20) zugeordneten Emittern (12) in den den Emittern (12) zugeordneten Speicherstellen des Ringspeichers jeweils ein Aktivierungswert abgelegt wird, der anzeigt, ob der dem betreffenden Druckpunkt zugeordnete Emitter (12) in dem dem betreffenden Speicherplatz zugeordnete Druckzyklus aktiviert werden soll,
     h) **dass** die Schritte f) und g) wiederholt werden, bis für eine der Anzahl der Druckzyklen entsprechende Anzahl von Reihen (20), jeweils eine der Anzahl der Emitter (N) entsprechende Anzahl Druckpunkte aus dem Datenspeicher (19) ausgelesen und für diese Druckpunkte entsprechende Aktivierungswerte im Ringspeicher abgelegt wurden,
     i) **dass** die Unterlage (1) und die Emitteranordnung (11, 11A bis 11D, 11A' bis 11D') an der dem Druckzyklus, in dessen Speicherplatz zuletzt Aktivierungswerte abgelegt wurden, zugeordneten Triggerstelle (A bis H) relativ zueinander positioniert werden und die Emitter (12) der Emitteranordnung (11, 11A bis 11D, 11A' bis 11D') in Abhängigkeit von den in diesem Speicherplatz abgelegten Aktivierungswerten angesteuert werden,
     j) **dass** für den Fall, falls noch mindestens ein weiterer Druckpunkt zu drucken ist,

       - die Speicherplätze derart zyklisch vertauscht werden, dass der Speicherplatz, dem die Triggerstelle (A bis H) zugeordnet ist, an welcher die Unterlage (1) und die Emitteranordnung zuletzt zum Triggern der Emitter (12) relativ zueinander positioniert wurden, der erste Speicherplatz ist, und danach

- die Schritte f) bis j) wiederholt werden.

7. Verfahren nach einem der Ansprüche 1 bis 6, **dadurch gekennzeichnet, dass** der Emitteranordnung (11, 11A bis 11D, 11A' bis 11D') ein Druckpuffer zugeordnet wird, in dem für jeden Emitter (12) der Emitteranordnung (11, 11A bis 11D, 11A' bis 11D') jeweils eine Speicherstelle vorgesehen ist, dass in jedem Druckzyklus jeweils für jeden Emitter (12) in Abhängigkeit von den Geometriedaten ein Aktivierungssignal in der dem betreffenden Emitter (12) zugeordneten Speicherstelle des Druckpuffers abgelegt wird, und dass die Emitteranordnung (11, 11A bis 11D, 11A' bis 11D') danach derart in dem Druckzyklus getriggert wird, dass die einzelnen Emitter (12) in Abhängigkeit von dem in der ihnen zugeordneten Speicherstelle abgelegten Aktivierungssignal angesteuert werden.

8. Verfahren nach Anspruch 7, **dadurch gekennzeichnet, dass** zum Bedrucken von konzentrisch zur Drehachse (2) angeordneten, jeweils durch eine innere und eine äußere Kreisbahn begrenzten Druckringen zumindest eine erste und eine zweite Emitteranordnung (11, 11A bis 11D, 11A' bis 11D') bereitgestellt werden, dass diese Emitteranordnungen (11, 11A bis 11D, 11A' bis 11D') derart relativ zu der Drehachse (2) positioniert werden, dass sich der arithmetische Mittelwert der inneren und der äußeren Kreisbahn der ersten Emitteranordnung (11, 11A bis 11D, 11A' bis 11D') vom arithmetischen Mittelwert der inneren und der äußeren Kreisbahn der zweiten Emitteranordnung (11, 11A bis 11D, 11A' bis 11D') unterscheidet, und dass der ersten Emitteranordnung (11, 11A bis 11D, 11A' bis 11D') eine andere Zahl M zugeordnet wird als der zweiten Emitteranordnung (11, 11A bis 11D, 11A' bis 11D').

9. Verfahren nach einem der Ansprüche 1 bis 8, **dadurch gekennzeichnet, dass** die Emitterspalten (13) der Emitteranordnung (11, 11A bis 11D, 11A' bis 11D') symmetrisch zu einer Radialebene angeordnet werden, die durch die Drehachse (2) und eine Normale auf die Drehachse (2) aufgespannt wird, derart, dass die Emitterspalten (13) parallel zu dieser Radialebene verlaufen.

10. Verfahren nach einem der Ansprüche 1 bis 9, **dadurch gekennzeichnet, dass** mindestens zwei Emitteranordnungen (11, 11A bis 11D, 11A' bis 11D') bereitgestellt werden, die bezüglich der Drehachse (2) um einen Drehwinkel zueinander versetzt sind, und dass die Emitter (12) der einzelnen Emitteranordnungen (11, 11A bis 11D, 11 A' bis 11D')jeweils zum Auftragen von Materialportionen nach mindestens einem der Ansprüche 1 bis 8 gesteuert werden.

11. Verfahren nach einem der Ansprüche 1 bis 10, **dadurch gekennzeichnet, dass** innerhalb der Emitterspalten (13) zueinander benachbarte Emitter (12) in einem konstanten ersten Rasterstabstand zueinander versetzt sind, dass zueinander benachbarte Emitterspalten (13) jeweils in einem konstanten zweiten Rasterstabstand zueinander versetzt sind, und dass der erste Rasterabstand um weniger als 20 Prozent, insbesondere um weniger als 10 Prozent von dem Produkt aus der Anzahl der Emitterspalten (13) und dem zweiten Rasterabstand abweicht und insbesondere mit diesem Produkt übereinstimmt.

12. Verfahren nach Anspruch 1 oder nach einem der Ansprüche 3 bis 11, soweit die Ansprüche 3 bis 11 auf Anspruch 1 rückbezogen sind, **dadurch gekennzeichnet, dass** zum Herstellen eines dreidimensionalen Formgegenstands (17A bis 17D) mehrere Materialschichten des düsengängigen Materials übereinander aufgetragen werden, wobei der Abstand zwischen der Emitteranordnung (11, 11A bis 11D, 11A' bis 11D') und der Unterlage (1) jeweils von Schicht zu Schicht um die Dicke der zuletzt aufgetragenen Materialschicht vergrößert und jede Materialschicht nach ihrem Auftragen jeweils verfestigt wird, bevor auf diese Materialschicht eine weitere Materialschicht aufgetragen wird.

13. Verfahren nach einem der Ansprüche 2 bis 11, **dadurch gekennzeichnet, dass** zum Herstellen eines dreidimensionalen Formgegenstands (17A, 17B, 17C, 17D) mehrere Materialschichten des flüssigen, pastösen oder pulverförmigen Materials übereinander durch Bestrahlen mit der Emitteranordnung (11, 11A, 11B, 11C, 11D) verfestigt werden.

**Claims**

1. Method for producing, according to given geometry data, at least one solid layer on a substrate (1) that is rotatable about a rotary axis (2),

    a) with an emitter arrangement (11, 11A to 11D, 11A' to 11D') with a number N of emitters (12) designed as material emission nozzles being provided for the emission of material portions of a nozzle-passable material onto a substrate (1), the emitters being arranged like a matrix in mutually parallelly offset emitter columns (13) and mutually parallelly offset emitter rows (14) running at an angle to the emitter columns (13), with emitter columns (13) adjacent to one another in the circumferential direction of the rotary axis (2) each being offset from one another in the direction of extent of the emitter columns (13) such that the individual emitters (12) of the emitter arrangement (11, 11A to 11D, 11A' to 11D') are arranged at different radial distances DA(i) from the rotary axis (2), the following applying:

$$DA(i) > DA(i + 1)$$

with $i \in \{1..(N - 1)\}$

b) with printing points ($P_M$ ... $P_{M+N}$) being assigned to the geometry data, the printing points being arranged offset from one another in a matrix with a plurality of adjacently running rows (20), in each of which a number Q of printing points are arranged, so that the following applies:

$$PA(j) > PA(j + 1)$$

with $j \in \{M..(M + N - 1)\}$ and $1 \leq M \leq Q - N$, where PA(j) is the radial distance of the j-th printing point $P_j$ in the relevant row (20) from the rotary axis (2) and M is an integer,

c) with at least one material portion being emitted for each printing point $P_k$ for which material should be emitted onto the substrate (2), the material portion being emitted by the emitter $D_k$ (12) of the emitter arrangement (11, 11A to 11D, 11A' to 11D') assigned to the relevant printing point $P_k$, where k is an integer between M and M+N-1,

d) **characterized in that** the emission of the material portions is implemented in printing cycles in which, for the material emission, the emitter arrangement is in each case triggered once at a trigger site (A to H) assigned to the relevant printing cycle and, from printing cycle to printing cycle, the substrate (1) and the emitter arrangement (11, 11A to 11D, 11A' to 11D') are in each case offset relative to one another by an angular distance (W) with respect to the rotary axis (2),

e) with all printing points $P_M$ ... $P_{M+N-1}$ of a row (20) to be printed being printed over a number of printing cycles that is greater than the number of emitter columns (13),

f) with the printing cycle for each printing point to be printed respectively being chosen so that, when the substrate (1) is positioned relative to the emitter arrangement (11, 11A to 11D, 11A' to 11D') at the trigger site (A to H), the angular difference between the rotary position of the trigger site (A to H) of the printing cycle and the rotary position at which the printing point to be printed is arranged with respect to the rotary axis (2) is no greater in terms of magnitude than half the angular distance (W) between the trigger sites (A to H).

2. Method for producing, according to given geometry data, at least one solid layer on a substrate (1) that is rotatable about a rotary axis (2),

    a) **characterized in that** a container (22) is provided, in which at least one material layer made of a liquid, pasty or powdery material (23) is applied to a substrate (1), with an emitter arrangement (11, 11A to 11D, 11A' to 11D') with a number N of mutually spaced apart radiation emitters (12) that face the material layer being provided for the purposes of exposing the material (23) to radiation that solidifies the material (23), the radiation emitters being arranged like a matrix in mutually parallelly offset emitter columns (13) and mutually parallelly offset emitter rows (14) running at an angle to the emitter columns (13), with emitter columns (13) adjacent to one another in the circumferential direction of the rotary axis (2) each being offset from one another in the direction of extent of the emitter columns (13) such that the individual emitters (12) of the emitter arrangement (11, 11A to 11D, 11A' to 11D') are arranged at different radial distances DA(i) from the rotary axis (2), the following applying:

$$DA(i) > DA(i + 1)$$

with $i \in \{1..(N - 1)\}$

b) with printing points ($P_M$ ... $P_{M+N}$) being assigned to the geometry data, the printing points being arranged offset from one another in a matrix with a plurality of adjacently running rows (20), in each of which a number Q of printing points are arranged, so that the following applies:

$$PA(j) > PA(j + 1)$$

with $j \in \{M..(M + N - 1)\}$ and $1 \leq M \leq Q - N$, where PA(j) is the radial distance of the j-th printing point $P_j$ in the relevant row (20) from the rotary axis (2) and M is an integer,

c) with radiation (21) being emitted at the material (23) for each printing point $P_k$ at which the solid layer should be present, the radiation being emitted by the emitter $D_k$ (12) of the emitter arrangement (11, 11A to 11D, 11A' to 11D') assigned to the relative printing point $P_k$, where k is an integer between M and M+N-1,

d) with the exposure of the material (23) being implemented in printing cycles in which, for irradiation purposes, the emitter arrangement (11, 11A to 11D, 11A' to 11D') is in each case triggered once at a trigger site (A to H) assigned to the relevant printing cycle and, from printing cycle to printing cycle, the substrate (1) and the emitter arrangement (11, 11A to 11D, 11A' to 11D') are in each case offset relative to one another by an angular distance (W) with respect to the rotary axis (2),

e) with all printing points $P_M$ ... $P_{M+N-1}$ of a row (20) to be printed being printed over a number of printing cycles that is greater than the number of emitter columns (13),

f) with the printing cycle for each printing point to be printed respectively being chosen so that, when the substrate (1) is positioned relative to the emitter arrangement (11, 11A to 11D, 11A' to 11D') at the trigger site (A to H), the angular difference between the rotary position of the trigger site (A to H) of the printing cycle and the rotary position at which the printing point to be printed is arranged with respect to the rotary axis (2) is no greater in terms of magnitude than half the angular distance (W) between the trigger sites (A to H).

3.  Method according to Claim 1 or 2, **characterized in that** the matrix is a Cartesian matrix and the rows (20) in which the printing points are offset from one another run parallel to one another.

4.  Method according to Claim 1 or 2, **characterized in that** the matrix is a polar matrix and the rows (20) in which the printing points are offset from one another are arranged radially with respect to the rotary axis, and **in that** preferably mutually adjacent rows (20) are in each case offset from one another at the angular distance (W) of the trigger sites (A to H).

5.  Method according to any one of Claims 1 to 4, **characterized in that**, for a number of directly consecutive trigger sites (A to H), the said number corresponding to the number of printing cycles, and respectively for the relevant trigger site (A to H) for each printing point $P_M$ ... $P_{M+N-1}$, for the printing of which the emitter arrangement (11, 11A to 11D, 11A' to 11D') is configured, a printing cycle is assigned to the relevant printing point $P_M$ ... $P_{M+N-1}$, and **in that**, subsequently and in accordance with this assignment and in each case for the individual rows (20), a printing cycle is assigned to each printing point $P_M$ ... $P_{M+N-1}$ to be printed, for the printing of which the emitter arrangement (11, 11A to 11D, 11A' to 11D') is configured, and the emitter arrangement (11, 11A to 11D, 11A' to 11D') is respectively triggered when reaching the trigger site (A to H) assigned to the relevant printing cycle.

6.  Method according to any one of Claims 1 to 5, **characterized**

a) **in that** a data memory (19) is provided, in which the geometry data are stored,
b) **in that** a circular buffer is provided, which has at least a number of memory spaces, the said number corresponding to the number of printing cycles, with each memory space comprising a number of memory locations, the said number corresponding to the number (N) of emitters (12) of the emitter arrangement (11, 11A to 11D, 11A' to 11D'), with each memory location being assigned to one respective emitter (12),
c) **in that** a respective memory space is assigned to each printing cycle for a number of directly consecutive printing cycles, the said number corresponding to the number of these printing cycles,
d) **in that**, for a first row (20) of printing points stored in the data memory (19), a number of printing points, for the printing of which the emitter arrangement (11, 11A to 11D, 11A' to 11D') is configured, is read from the data memory (19), the said number corresponding to the number (N) of emitters (12) of the emitter arrangement (11, 11A to 11D, 11A' to 11D'),
e) **in that** a respective activation value for the emitters (12) assigned to the printing points in the first row (20) is stored in the memory locations of the circular buffer assigned to the emitters (12), the activation value indicating whether the emitter (12) assigned to the relevant printing point should be activated in the printing cycle assigned to the relevant memory space,
f) **in that**, for a further row (20) of printing points stored in the data memory (19), a number of printing points, for the printing of which the emitter arrangement (11, 11A to 11D, 11A' to 11D') is configured, is read from the data memory (19), the said number corresponding to the number (N) of emitters (12) of the emitter arrangement,
g) **in that** a respective activation value for the emitters (12) assigned to the printing points in the further row (20) is stored in the memory locations of the circular buffer assigned to the emitters (12), the activation value indicating whether the emitter (12) assigned to the relevant printing point should be activated in the printing cycle assigned to the relevant memory space,
h) **in that** steps f) and g) are repeated until, for a number of rows (20), the said number corresponding to the number of printing cycles, a number of printing points, the said number corresponding to the number of emitters (N), were respectively read from the data memory (19) and corresponding activation values were stored in the circular buffer for these printing points,

i) **in that** the substrate (1) and the emitter arrangement (11, 11A to 11D, 11A' to 11D') are positioned relative to one another at the trigger site (A to H) assigned to the printing cycle in the memory space of which activation values were stored last, and the emitters (12) of the emitter arrangement (11, 11A to 11D, 11A' to 11D') are controlled on the basis of the activation values stored in this memory space,

j) **in that**, in the case where at least one further printing point should be printed,

- the memory spaces are cyclically interchanged in such a way that the memory space assigned the trigger site (A to H) at which the substrate (1) and the emitter arrangement were last positioned relative to one another for the purposes of triggering the emitters (12) is the first memory space and, subsequently,
- steps f) to j) are repeated.

7. Method according to any one of Claims 1 to 6, **characterized in that** a printing buffer is assigned to the emitter arrangement (11, 11A to 11D, 11A' to 11D'), a respective memory location being provided in the said printing buffer for each emitter (12) of the emitter arrangement (11, 11A to 11D, 11A' to 11D'), **in that**, in each printing cycle, an activation signal is stored in the memory location of the printing buffer assigned to the relevant emitter (12) on the basis of the geometry data, in each case for each emitter (12), and **in that** the emitter arrangement (11, 11A to 11D, 11A' to 11D') is subsequently triggered in the printing cycle in such a way that the individual emitters (12) are controlled on the basis of the activation signal stored in the memory location assigned thereto.

8. Method according to Claim 7, **characterized in that** at least a first and a second emitter arrangement (11, 11A to 11D, 11A' to 11D') are provided for printing printed rings which are arranged concentrically with the rotary axis (2) and are each delimited by an inner and an outer circular trajectory, **in that** these emitter arrangements (11, 11A to 11D, 11A' to 11D') are positioned relative to the rotary axis (2) so that the arithmetic mean of the inner and the outer circular trajectory of the first emitter arrangement (11, 11A to 11D, 11A' to 11D') differs from the arithmetic mean of the inner and the outer circular trajectory of the second emitter arrangement (11, 11A to 11D, 11A' to 11D'), and **in that** a different number M is assigned to the first emitter arrangement (11, 11A to 11D, 11A' to 11D') vis-à-vis the second emitter arrangement (11, 11A to 11D, 11A' to 11D').

9. Method according to any one of Claims 1 to 8, **characterized in that** the emitter columns (13) of the emitter arrangement (11, 11A to 11D, 11A' to 11D') are arranged symmetrically with respect to a radial plane spanned by the rotary axis (2) and a normal to the rotary axis (2), in such a way that the emitter columns (13) run parallel to this radial plane.

10. Method according to any one of Claims 1 to 9, **characterized in that** at least two emitter arrangements (11, 11A to 11D, 11A' to 11D') are provided, the said emitter arrangements being offset from one another by a rotary angle with respect to the rotary axis (2), and **in that** the emitters (12) of the individual emitter arrangements (11, 11A to 11D, 11A' to 11D') are each controlled according to at least one of Claims 1 to 8 for the purposes of applying material portions.

11. Method according to any one of Claims 1 to 10, **characterized in that** emitters (12) adjacent to one another within the emitter columns (13) are offset from one another at a constant first grid spacing, **in that** emitter columns (13) adjacent to one another are respectively offset from one another at a constant second grid spacing, and **in that** the first grid spacing deviates by less than 20 percent, in particular by less than 10 percent from the product of the number of emitter columns (13) and the second grid spacing, and in particular corresponds to this product.

12. Method according to Claim 1 or according to any one of Claims 3 to 11, provided Claims 3 to 11 refer back to Claim 1, **characterized in that** a plurality of material layers of the nozzle-passable material are applied one above the other for the purposes of producing a three-dimensional shaped object (17A to 17D), with the distance between the emitter arrangement (11, 11A to 11D, 11A' to 11D') and the substrate (1) respectively being increased from layer to layer by the thickness of the material layer applied last, and each material layer is respectively solidified following its application before a further material layer is applied to this material layer.

13. Method according to any one of Claims 2 to 11, **characterized in that** a plurality of material layers of the liquid, pasty or powdery material are solidified one above the other by way of an exposure using the emitter arrangement (11, 11A, 11B, 11C, 11D) for the purposes of producing a three-dimensional shaped object (17A, 17B, 17C, 17D).

**Revendications**

1. Procédé de fabrication d'au moins une couche solide sur un support (1) pouvant tourner autour d'un axe de rotation (2) conformément à des données géométriques prédéfinies

a) en vue de délivrer des portions de matière d'une matière utilisable avec des buses sur un support (1), un arrangement d'émetteurs (11, 11A à 11D, 11A' à 11D') est fourni, comprenant un nombre N d'émetteurs (12) réalisés sous la forme de buses de délivrance de matière, lesquels sont disposés en forme de matrice en colonnes d'émetteurs (13) décalées parallèlement les unes aux autres et en lignes d'émetteurs (14) décalées parallèlement les unes aux autres et suivant un tracé transversal par rapport aux colonnes d'émetteurs (13), les colonnes d'émetteurs (13) voisines les unes des autres dans la direction périphérique de l'axe de rotation (2) étant respectivement décalées les unes par rapport aux autres dans la direction de l'étendue des colonnes d'émetteurs (13) de telle sorte que les émetteurs (12) individuels de l'arrangement d'émetteurs (11, 11A à 11D, 11A' à 11D') sont disposés à des écarts radiaux DA(i) différents par rapport à l'axe de rotation (2), la règle suivante s'appliquant ici :

$$DA(i) > DA(i + 1)$$

avec $i \in [1..(N - 1)]$
b) des points d'impression ($P_M$ ... $P_{M+N}$) étant associés aux données géométriques, lesquels sont décalés les uns par rapport aux autres dans une matrice comprenant plusieurs rangées (20) qui suivent un tracé les unes à côté des autres et dans lesquels sont respectivement disposés un nombre Q de points d'impression, de telle sorte que la règle suivante s'applique :

$$PA(j) > PA(j + 1),$$

avec $j \in [M..(M + N - 1)]$ et $1 \leq M \leq Q - N$,
PA(j) étant l'écart radial du j-ième point d'impression Pj de la rangée (20) concernée par rapport à l'axe de rotation (2) et M un nombre entier,
c) pour les points d'impression $P_k$ pour lesquels la matière doit être délivrée sur le support (2), au moins une portion de matière étant respectivement délivrée depuis l'émetteur $D_k$ (12) de l'arrangement d'émetteurs (11, 11A à 11D, 11A' à 11D') qui est associé au point d'impression $P_k$ concerné, k étant un nombre entier compris entre M et M+N-1,
d) **caractérisé en ce que**
la délivrance des portions de matière s'effectue en cycles d'impression, dans lesquels l'arrangement d'émetteurs, en vue de la délivrance de matière, est respectivement déclenché une fois au niveau d'un point de déclenchement (A à H) associé au cycle d'impression concerné et le support (1) ainsi que l'arrangement d'émetteurs (11, 11A à 11D, 11A' à 11D') sont respectivement décalés l'un par rapport à l'autre d'un cycle d'impression à l'autre d'un écart angulaire (W) par rapport à l'axe de rotation (2),
e) l'impression de tous les points d'impression $P_M$ ... $P_{M+N-1}$ à imprimer d'une rangée (20) s'effectuant dans un nombre de cycles d'impression qui est supérieur au nombre de colonnes d'émetteurs (13),
f) le cycle d'impression pour chaque point d'impression à imprimer étant respectivement choisi de telle sorte que la valeur de la différence angulaire entre la position de rotation du point de déclenchement (A à H) du cycle d'impression et la position de rotation dans laquelle est disposé le point d'impression à imprimer par rapport à l'axe de rotation (2) lorsque le support (1) est positionné au niveau du point de déclenchement (A à H) par rapport à l'arrangement d'émetteurs (11, 11A à 11D, 11A' à 11D') n'est pas supérieure à la moitié de l'écart angulaire (W) entre les points de déclenchement (A à H).

2. Procédé de fabrication d'au moins une couche solide sur un support (1) pouvant tourner autour d'un axe de rotation (2) conformément à des données géométriques prédéfinies

a) **caractérisé en ce que**
un récipient (22) est fourni, dans lequel au moins une couche de matière composée d'une matière (23) liquide, pâteuse ou poudreuse est appliquée sur un support (1), un arrangement d'émetteurs (11, 11A à 11D, 11A' à 11D') comprenant un nombre N d'émetteurs (12) espacés les uns des autres étant fourni pour l'irradiation de la matière (23) avec un rayonnement qui solidifie la matière (23), des émetteurs de rayonnement (12) faisant face à la couche de matière étant fournis, lesquels sont disposés en forme de matrice en colonnes d'émetteurs (13) décalées parallèlement les unes aux autres et en lignes d'émetteurs (14) décalées parallèlement les unes aux autres et suivant un tracé transversal par rapport aux colonnes d'émetteurs (13), les colonnes d'émetteurs (13) voisines les unes des autres dans la direction périphérique de l'axe de rotation (2) étant respectivement décalées les unes par rapport aux autres dans la direction de l'étendue des colonnes d'émetteurs (13) de telle sorte que les émetteurs (12) individuels de l'arrangement d'émetteurs (11, 11A à 11D, 11A' à 11D') sont disposés à des écarts radiaux DA(i) différents par rapport à l'axe de rotation (2), la règle suivante s'appliquant ici :

$$DA(i) > DA(i + 1)$$

avec $i \in [1..(N - 1)]$

b) des points d'impression ($P_M ... P_{M+N}$) étant associés aux données géométriques, lesquels sont décalés les uns par rapport aux autres dans une matrice comprenant plusieurs rangées (20) qui suivent un tracé les unes à côté des autres et dans lesquels sont respectivement disposés un nombre Q de points d'impression, de telle sorte que la règle suivante s'applique :

$$PA(j) > PA(j + 1),$$

avec $j \in [M..(M + N - 1)]$ et $1 \leq M \leq Q - N$,
PA(j) étant l'écart radial du j-ième point d'impression $P_j$ de la rangée (20) concernée par rapport à l'axe de rotation (2) et M un nombre entier,

c) pour les points d'impression $P_k$ au niveau desquels doit se trouver la couche solide, un rayonnement (21) étant délivré sur la matière (23) respectivement depuis l'émetteur $D_k$ (12) de l'arrangement d'émetteurs (11, 11A à 11D, 11A' à 11D') qui est associé au point d'impression $P_k$ concerné, k étant un nombre entier compris entre M et M+N-1,

d) l'irradiation de la matière (23) s'effectuant en cycles d'impression, dans lesquels l'arrangement d'émetteurs (11, 11A à 11D, 11A' à 11D'), en vue de l'irradiation, est respectivement déclenché une fois au niveau d'un point de déclenchement (A à H) associé au cycle d'impression concerné et le support (1) ainsi que l'arrangement d'émetteurs (11, 11A à 11D, 11A' à 11D') sont respectivement décalés l'un par rapport à l'autre d'un cycle d'impression à l'autre d'un écart angulaire (W) par rapport à l'axe de rotation (2),

e) l'impression de tous les points d'impression $P_M ... P_{M+N-1}$ à imprimer d'une rangée (20) s'effectuant dans un nombre de cycles d'impression qui est supérieur au nombre de colonnes d'émetteurs (13),

f) le cycle d'impression pour chaque point d'impression à imprimer étant respectivement choisi de telle sorte que la valeur de la différence angulaire entre la position de rotation du point de déclenchement (A à H) du cycle d'impression et la position de rotation dans laquelle est disposé le point d'impression à imprimer par rapport à l'axe de rotation (2) lorsque le support (1) est positionné au niveau du point de déclenchement (A à H) par rapport à l'arrangement d'émetteurs (11, 11A à 11D, 11A' à 11D') n'est pas supérieure à la moitié de l'écart angulaire (W) entre les points de déclenchement (A à H).

3. Procédé selon la revendication 1 ou 2, **caractérisé en ce que** la matrice est une matrice cartésienne et les rangées (20) dans lesquelles les points d'impression sont décalés les uns par rapport aux autres suivent un tracé parallèle les unes aux autres.

4. Procédé selon la revendication 1 ou 2, **caractérisé en ce que** la matrice est une matrice polaire et les rangées (20) dans lesquelles les points d'impression sont décalés les uns par rapport aux autres sont disposées radialement par rapport à l'axe de rotation, et **en ce que** les rangées (20) voisines les unes des autres sont de préférence respectivement décalées les unes par rapport aux autres de l'écart angulaire (W) des points de déclenchement (A à H).

5. Procédé selon l'une des revendications 1 à 4, **caractérisé en ce que** pour un nombre de points de déclenchement (A à H) qui se suivent directement correspondant au nombre de cycles d'impression, un cycle d'impression est associé au point d'impression $P_M ... P_{M+N-1}$ concerné respectivement pour le point de déclenchement (A à H) concerné pour chaque point d'impression $P_M ... P_{M+N-1}$ pour l'impression duquel est configuré l'arrangement d'émetteurs (11, 11A à 11D, 11A' à 11D'), et **en ce qu'**ensuite, un cycle d'impression est associé conformément à cette association respectivement pour les rangées (20) individuelles à chacun des points d'impression $P_M ... P_{M+N-1}$ à imprimer pour l'impression desquels est configuré l'arrangement d'émetteurs (11, 11A à 11D, 11A' à 11D') et l'arrangement d'émetteurs (11, 11A à 11D, 11A' à 11D') est déclenché respectivement en atteignant le point de déclenchement (A à H) associé au cycle d'impression concerné.

6. Procédé selon l'une des revendications 1 à 5, **caractérisé en ce**

   a) **qu'**une mémoire de données (19) est fournie, dans laquelle sont stockées les données géométriques,
   b) **qu'**une mémoire circulaire est fournie, laquelle possède au moins un nombre de zones de mémoire correspondant au nombre de cycles d'impression, lesquelles comportent respectivement un nombre d'emplacements de mémoire correspondant au nombre (N) d'émetteurs (12) de l'arrangement d'émetteurs (11, 11A à 11D, 11A' à 11D'), parmi lesquels chacun est respectivement associé à un émetteur (12),
   c) **que** pour un nombre de cycles d'impression qui se suivent directement correspondant au nombre de cycles d'impression, l'une des zones de mémoire est respectivement associée à chacun de ces cycles d'impression,
   d) **que** pour une première rangée (20) de points d'impression stockés dans la mémoire de données (19), un nombre de points d'impression, pour l'impression desquels est configuré l'arrangement d'émetteurs (11, 11A à 11D, 11A' à 11D'), correspondant au nombre (N) d'émetteurs (12) de l'arrangement d'émetteurs (11, 11A à 11D, 11A' à 11D') est lu depuis la mémoire de données (19),

e) **que** pour les émetteurs (12) associés aux points d'impression de la première rangée (20), une valeur d'activation est respectivement stockée dans les emplacements de mémoire associés aux émetteurs (12) de la mémoire circulaire, laquelle indique si l'émetteur (12) associé au point d'impression concerné doit être activé dans le cycle d'impression associé à la zone de mémoire concernée,

f) **que** pour une rangée (20) supplémentaire de points d'impression stockés dans la mémoire de données (19), un nombre de points d'impression, pour l'impression desquels est configuré l'arrangement d'émetteurs (11, 11A à 11D, 11A' à 11D'), correspondant au nombre (N) d'émetteurs (12) de l'arrangement d'émetteurs est lu depuis la mémoire de données (19),

g) **que** pour les émetteurs (12) associés aux points d'impression de la rangée (20) supplémentaire, une valeur d'activation est respectivement stockée dans les emplacements de mémoire associés aux émetteurs (12) de la mémoire circulaire, laquelle indique si l'émetteur (12) associé au point d'impression concerné doit être activé dans le cycle d'impression associé à la zone de mémoire concernée,

h) **que** les étapes f) et g) sont répétées jusqu'à ce que pour un nombre de rangées (20) correspondant au nombre de cycles d'impression, un nombre de points d'impression correspondant au nombre d'émetteurs (N) a respectivement été lu depuis la mémoire de données (19) et des valeurs d'activation correspondantes ont été stockées dans la mémoire circulaire pour ces points d'impression,

i) **que** le support (1) et l'arrangement d'émetteurs (11, 11A à 11D, 11A' à 11D') sont positionnés l'un par rapport à l'autre au niveau du point de déclenchement (A à H) qui est associé au cycle d'impression dans la zone de mémoire duquel ont été stockées en dernier des valeurs d'activation et les émetteurs (12) de l'arrangement d'émetteurs (11, 11A à 11D, 11A' à 11D') sont commandés en fonction des valeurs d'activation stockées dans cette zone de mémoire,

j) **que** dans le cas où au moins un point d'impression supplémentaire est encore à imprimer,

  - les zones de mémoire sont permutées cycliquement de telle sorte que la zone de mémoire qui est associée au point de déclenchement (A à H) au niveau duquel le support (1) et l'arrangement d'émetteurs ont été positionnés en dernier l'un par rapport à l'autre en vue de déclencher les émetteurs (12) est la première zone de mémoire, et ensuite
  - les étapes f) à j) sont répétées.

7. Procédé selon l'une des revendications 1 à 6, **caractérisé en ce qu'**une mémoire tampon d'impression est associée à l'arrangement d'émetteurs (11, 11A à 11D, 11A' à 11D'), dans laquelle un emplacement de mémoire est respectivement prévu pour chaque émetteur (12) de l'arrangement d'émetteurs (11, 11A à 11D, 11A' à 11D'), **en ce que** dans chaque cycle d'impression, un signal d'activation est respectivement stocké dans chaque cycle d'impression pour chaque émetteur (12) dans l'emplacement de mémoire associé à l'émetteur (12) concerné en fonction des données géométriques, et **en ce que** l'arrangement d'émetteurs (11, 11A à 11D, 11A' à 11D') est ensuite déclenché dans le cycle d'impression de telle sorte que les émetteurs (12) individuels sont commandés en fonction du signal d'activation stocké dans l'emplacement de mémoire qui leur est associé.

8. Procédé selon la revendication 7, **caractérisé en ce que** pour l'impression d'anneaux imprimés disposés de manière concentrique par rapport à l'axe de rotation (2) et respectivement délimités par une trajectoire circulaire intérieure et extérieure, au moins un premier et un deuxième arrangement d'émetteurs (11, 11A à 11D, 11A' à 11D') sont fournis, **en ce que** ces arrangements d'émetteurs (11, 11A à 11D, 11A' à 11D') sont positionnés par rapport à l'axe de rotation (2) de telle sorte que la valeur moyenne arithmétique de la trajectoire circulaire intérieure et extérieure du premier arrangement d'émetteurs (11, 11A à 11D, 11A' à 11D') est différente la valeur moyenne arithmétique de la trajectoire circulaire intérieure et extérieure du deuxième arrangement d'émetteurs (11, 11A à 11D, 11A' à 11D') et **en ce qu'**un nombre M différent est associé au premier arrangement d'émetteurs (11, 11A à 11D, 11A' à 11D') qu'au deuxième arrangement d'émetteurs (11, 11A à 11D, 11A' à 11D').

9. Procédé selon l'une des revendications 1 à 8, **caractérisé en ce que** les colonnes d'émetteurs (13) de l'arrangement d'émetteurs (11, 11A à 11D, 11A' à 11D') sont disposées de manière symétrique par rapport à un plan radial, lequel passe par l'axe de rotation (2) et une normale à l'axe de rotation (2), de telle sorte que les colonnes d'émetteurs (13) suivent un tracé parallèle à ce plan radial.

10. Procédé selon l'une des revendications 1 à 9, **caractérisé en ce qu'**au moins deux arrangements d'émetteurs (11, 11A à 11D, 11A' à 11D') sont fournis, lesquels sont décalés l'un par rapport à l'autre d'un angle de rotation en référence à l'axe de rotation (2), et **en ce que** les émetteurs (12) des arrangements d'émetteurs (11, 11A à 11D, 11A' à 11D') individuels sont respectivement commandés pour appliquer des portions de matière selon au moins l'une des revendications 1 à 8.

11. Procédé selon l'une des revendications 1 à 10, **caractérisé en ce qu'**à l'intérieur des colonnes d'émetteurs (13), les émetteurs (12) voisins les uns des autres sont décalés les uns par rapport aux autres d'un premier écart de grille constant, **en ce que** les colonnes d'émetteurs (13) voisines les unes des autres sont respectivement décalées les unes par rapport aux autres d'un deuxième écart de grille constant, et **en ce que** le premier écart de grille présente une différence inférieure à 20 pourcent, notamment inférieure à 10 pourcent du produit du nombre de colonnes d'émetteurs (13) par le deuxième écart de grille et coïncide notamment avec ce produit.

12. Procédé selon la revendication 1 ou selon l'une des revendications 3 à 11, dans la mesure où les revendications 3 à 11 font référence à la revendication 1, **caractérisé en ce que** pour la fabrication d'un objet moulé tridimensionnel (17A à 17D), plusieurs couches de matière de la matière utilisable avec des buses sont appliquées les unes au-dessus des autres, l'écart entre l'arrangement d'émetteurs (11, 11A à 11D, 11A' à 11D') et le support (1) étant respectivement agrandi d'une couche à l'autre de l'épaisseur de la couche de matière appliquée en dernier et chaque couche de matière étant respectivement solidifiée après son application avant qu'une couche de matière supplémentaire soit appliquée sur cette couche de matière.

13. Procédé selon l'une des revendications 2 à 11, **caractérisé en ce que** pour la fabrication d'un objet moulé tridimensionnel (17A, 17B, 17C, 17D), plusieurs couches de matière de la matière liquide, pâteuse ou poudreuse sont solidifiées les unes au-dessus des autres par irradiation avec l'arrangement d'émetteurs (11, 11A, 11B, 11C, 11D).

Fig. 1

Fig. 2

Fig. 3

Fig. 4

A

12

A1

5

Fig. 5A

Fig. 5B

Fig. 5C

Fig.5D

Fig. 5E

Fig. 5F

Fig. 5G

Fig. 5H

Fig. 5I

|     1      |     2      |     3      |     4      |
|:---------:|:---------:|:---------:|:---------:|
| 000000    | 000000    | **AA**0000 | **BBA**000 |
| 000000    | **A**00000 | **BA**0000 | **CBA**000 |
| 000000    | **A**00000 | **BA**0000 | **CBA**000 |
| 000000    | **A**00000 | **BA**0000 | **CBA**000 |
| **A**00000 | **B**00000 | **CA**0000 | **DBA**000 |
| Fig. 6A   | Fig. 6B   | Fig. 6C   | Fig. 6D   |

|     5      |     6      |     7      |     8      |
|:---------:|:---------:|:---------:|:---------:|
| **CCBA**00 | **DDCBA**0 | **EEDCBA** | **FFEDCB** |
| **DCBA**00 | **EDCBA**0 | **FEDCBA** | **GFEDCB** |
| **DCBA**00 | **EDCBA**0 | **FEDCBA** | **GFEDCB** |
| **DCBA**00 | **EDCBA**0 | **FEDCBA** | **GFEDCB** |
| **ECBA**00 | **FDCBA**0 | **GEDCB**0 | **HFEDCA** |
| Fig. 6E   | Fig. 6F   | Fig. 6G   | Fig. 6H   |

2  3  4  5

| 000000 | AA0000 | BBA000 | CCBA00 |
| A00000 | BA0000 | CBA000 | DCBA00 |
| A00000 | BA0000 | CBA000 | DCBA00 |
| A00000 | BA0000 | CBA000 | DCBA00 |
| B00000 | CA0000 | DBA000 | ECBA00 |

Fig. 7B     Fig. 7C     Fig. 7D     Fig. 7E

6  7  8  1

| DDCBA0 | EEDCBA | FFEDCB | GGFEDC |
| EDCBA0 | FEDCBA | GFEDCB | HGFEDC |
| EDCBA0 | FEDCBA | GFEDCB | HGFEDC |
| EDCBA0 | FEDCBA | GFEDCB | HGFEDC |
| FDCBA0 | GEDCB0 | HFEDCA | IGFEDB |

Fig. 7F     Fig. 7G     Fig. 7H     Fig. 7I

Fig. 8A

Fig. 8B

Fig. 8C

Fig. 8D

Fig. 8E

Fig. 8F

Fig. 8G

Fig. 8H

**Analyse der PC-Daten für einen Druckkopf mit "n" Düsenspalten**

Reihenweiser Empfang der Bilddaten vom PC

- Suche nach Triggerstellen, welche die Druckpunkte d. aktuellen Reihe kreuzen
- Zuordnen und Speichern der Druck-Punkte im Ringspeicher

Nächste Zeile

Anzahl der Triggerstellen erreicht?

?

nein

ja

Füllen ders Ringspeichers

Drucken der Druckdaten

Drucken der aktuellen Spalte aus dem Zwischenspeicher

Druckjob beendet?

?

nein

ja

- Empfang der nächsten Reihe
- Suche nach Strahlen, welche die Druckpunkte der aktuellen Strahlen kreuzen
- Zuordnen und Speichern der Bildpunkte im Ringspeicher

- Kontinuierlicher Druck aus dem Datenspeicher
- paralleler Empfang + Analyse der nächsten Reihen

Fig. 9

EP 3 956 126 B1

Fig. 10

Fig. 11

Fig. 12

Fig. 13

Fig. 14

Fig. 15

Fig. 16

Fig. 17

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040265413 A1
- US 2016096319 A1
- US 2016339724 A1
- DE 102010041284 A1
- US 10150247 B2
- WO 2016180842 A1